(19) Europäisches Patentamt
European Patent Office
Office européen des brevets

(11) EP 4 345 058 B1

(12) EUROPÄISCHE PATENTSCHRIFT

(45) Veröffentlichungstag und Bekanntmachung des Hinweises auf die Patenterteilung:
**18.02.2026 Patentblatt 2026/08**

(21) Anmeldenummer: **23191320.3**

(22) Anmeldetag: **14.08.2023**

(51) Internationale Patentklassifikation (IPC):
***C01B 25/00*** $^{(2006.01)}$ ***C07F 9/58*** $^{(2006.01)}$
***C07F 9/09*** $^{(2006.01)}$ ***C07F 9/11*** $^{(2006.01)}$
***C07F 9/12*** $^{(2006.01)}$ ***C07F 9/30*** $^{(2006.01)}$
***C07F 9/6503*** $^{(2006.01)}$ ***C07F 9/6506*** $^{(2006.01)}$
***C07F 9/6518*** $^{(2006.01)}$ ***C07F 9/6561*** $^{(2006.01)}$
***C07F 9/6574*** $^{(2006.01)}$

(52) Gemeinsame Patentklassifikation (CPC):
**C01B 25/00; C07F 9/091; C07F 9/11; C07F 9/12; C07F 9/304; C07F 9/58; C07F 9/65031; C07F 9/6506; C07F 9/6518; C07F 9/6561; C07F 9/65744**

(54) **VERFAHREN ZUR WIEDERVERWERTUNG VON ORGANOPHOSPHATEN**

METHOD FOR RECYCLING ORGANOPHOSPHATES

PROCÉDÉ DE RECYCLAGE D’ORGANOPHOSPHATES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **16.08.2022 DE 102022120599**

(43) Veröffentlichungstag der Anmeldung:
**03.04.2024 Patentblatt 2024/14**

(73) Patentinhaber: **Technische Universität Dresden
01069 Dresden (DE)**

(72) Erfinder:
- **WEIGAND, Jan
01309 Dresden (DE)**
- **SCHWEDTMANN, Kai
01069 Dresden (DE)**
- **SCHNEIDER, Tobias
01069 Dresden (DE)**
- **SCHULZ, Stephen
01099 Dresden (DE)**

(74) Vertreter: **Maiwald GmbH
Elisenhof
Elisenstraße 3
80335 München (DE)**

(56) Entgegenhaltungen:
**EP-A1- 4 183 742**

- **OSUMAH ABDULAKEEM ET AL: "Diamidophosphate (DAP): A Plausible Prebiotic Phosphorylating Reagent with a Chem to BioChem Potential?", CHEMBIOCHEM, vol. 22, no. 21, 3 November 2021 (2021-11-03), Hoboken, USA, pages 3001 - 3009, XP055916857, ISSN: 1439-4227, Retrieved from the Internet <URL:https://onlinelibrary.wiley.com/doi/full-xml/10.1002/cbic.202100274> DOI: 10.1002/cbic.202100274**
- **ROVNAN�K PAVEL ET AL: "Base-Induced Dismutation of POCl 3 and POBr 3 :? Synthesis and Structure of Ligand-Stabilized Dioxophosphonium Cations", INORGANIC CHEMISTRY, vol. 43, no. 7, 1 April 2004 (2004-04-01), Easton , US, pages 2435 - 2442, XP055916964, ISSN: 0020-1669, DOI: 10.1021/ic0354163**
- **THILO E.: "The Structural Chemistry of Condensed Inorganic Phosphates", ANGEWANTE CHEMIE INTERNATIONAL EDITION, vol. 4, no. 12, 1 December 1965 (1965-12-01), DE, pages 1061 - 1071, XP055916983, ISSN: 0570-0833, Retrieved from the Internet <URL:http://dx.doi.org/10.1002/anie.196510611> DOI: 10.1002/anie.196510611**
- **WALTER FELDMANN ET AL: "Amidotriphosphat", ZEITSCHRIFT F�R ANORGANISCHE UND ALLGEMEINE CHEMIE,, vol. 328, no. 3-4, 1 April 1964 (1964-04-01), pages 113 - 126, XP002806355**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Phosphor ist als molekularer Baustein für alle Lebensformen essentiell, ist zentraler Bestandteil in der weltweiten Lebensmittelproduktion und hat unzählige Anwendungen in der Industrie (siehe: W. Schipper, Eur. J. Inorg. Chem. 2014, 1567) sowie in den Bereichen Grundlagenforschung und anwendungsorientierter Forschung in Universitäten und Forschungsinstituten.

Vor diesem Hintergrund ist die derzeitige Erschöpfung und Ausbeutung der verfügbaren Phosphorressourcen äußerst besorgniserregend. Phosphorressourcen werden von der Europäischen Kommission bereits als kritische Rohstoffe angesehen (siehe: European Commission, Report of the Ad hoc Working Group on defining critical raw materials: Report on Critical Raw Materials for the EU Ref. Ares, 2015, 1819503 - 29/04/2015). Darüber hinaus sind derzeitige Synthesemethoden zur Herstellung der meisten Phosphorverbindungen ressourcenineffizient, energieintensiv und erfordern gefährliche und toxische Reagenzien (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014**;** e) H. Ohtake, S. Tsuneda, Phosphorus Recovery and Recycling, Springer, Singapore, 2018).

Die natürliche, aber nicht erneuerbare Ressource aller Phosphorverbindungen, ist Phosphatgestein wie zum Beispiel Apatit ($Ca_5(PO_4)_3$(F, OH, Cl)). Phosphor liegt hier in seiner stabilsten Oxidationsstufe +V als Phosphat ($PO_4^{3-}$) vor.

In diesem Zusammenhang spricht man von primären Phosphorressourcen. Sekundäre Phosphorressourcen sind solche, die durch Wiederverwertung (Recycling) zur Verfügung gestellt werden.

Die überwiegende Mehrheit der industriell relevanten phosphorhaltigen Produkte wie Flammschutzmittel, Pharmazeutika, Düngemittel, Pestizide, Weichmacher und Lebensmittel- oder Arzneimittelzusätze usw. weist das zentrale Phosphoratom in seiner stabilsten Oxidationsstufe +V auf (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** J. L. Jones, Y. G. Yingling, I. M. Reaney, P. Westerhoff, MRS Bull. 2020, 45, 7). Diese Phosphor(V)-Verbindungen können nach der Anzahl der an das Phosphoratom gebundenen Sauerstoffatome klassifiziert werden, d.h. Phosphate ($PO_4^{3-}$), Phosphonate ($RPO_3^{2-}$), Phosphinate ($R_2PO_2^-$) und Phosphanoxide ($R_3PO$).

Der Großteil des heute abgebauten Phosphatminerals wird für die Synthese von Phosphorsäure ($H_3PO_4$) für die Düngemittelindustrie verwendet. Die Synthese erfolgt meist im sogenannten Nassverfahren. Dabei erfolgt der Aufschluss von Rohphosphat mit Mineralsäuren (Schwefel-, Salz- oder Salpetersäure). In diesem Verfahren fallen große Mengen Nebenprodukte an.

Alternativ lässt sich Phosphorsäure ausgehend von der elektrothermischen Reduktion von Phosphatgestein zu weißem Phosphor ($P_4$) erhalten. Weißer Phosphor ist die wichtigste industrielle Phosphorquelle für die Lebensmittelherstellung, sowie für pharmazeutische, landwirtschaftliche und zahlreiche andere industrielle Anwendungen. Es erfolgt die Verbrennung von weißem Phosphor ($P_4$) zu Phosphorpentaoxid ($P_4O_{10}$) und die anschließende Hydrolyse (sogenannte thermische Phosphorsäure).

Mit Ausnahme der vergleichsweise minderwertigen Phosphorsäure ($H_3PO_4$), die aus dem oben erwähnten Nassverfahren gewonnen wird, wird der synthetisch relevante Phosphor im thermischen Verfahren zu $P_4$ reduziert und ausgehend davon entweder zu $P_4O_{10}$ oxidiert, zu $PCl_3$ chloriert, oder zu $OPCl_3$ oxychloriert.

Diese drei Phosphorverbindungen ($P_4O_{10}$, $PCl_3$, $OPCl_3$) stellen die wichtigsten Phosphorquellen von synthetischer Relevanz dar (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial Chemistry (Wiley, 2000**);** c) K. Schrödter et al., "Phosphoric Acid and Phosphates," Ullmann's Encyclopedia of Industrial Chemistry (Wiley, Weinheim, Germany, 2008**);** d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014**;** e) H. Ohtake, S. Tsuneda, Phosphorus Recovery and Recycling, Springer, Singapore, 2018**).**

Unter den verschiedenen Zwischenprodukten der weiteren Synthesestufen ist die wichtigste Phosphor(III)-Quelle Phosphortrichlorid ($PCl_3$). Hierbei handelt es sich um eine korrosive, toxische und flüchtige Flüssigkeit. Phosphortrichlorid wird in nachfolgenden Transformationsreaktionen wie Hydrolyse, Alkoholyse und Salzmetathese verwendet, um industriell wichtige Phosphorchemikalien sowie Feinchemikalien für den akademischen Bereich zu erhalten. Bei diesen Transformationsreaktionen werden die Chloratome des $PCl_3$ als Abfall in Form von Salzfracht oder in Form von korrosiven Gasen (z.B. HCl) in Kauf genommen, was einer zeitgemäßen und atomökonomischen Verwendung widerspricht (siehe: a) Emsley, J. The 13th Element: The Sordid Tale of Murder, Fire, and Phosphorus; John Wiley & Sons, Inc.: New York, 2000**;** b) H. Diskowski, T. Hofmann, "Phosphorus," Ullmann's Encyclopedia of Industrial

Chemistry (Wiley, 2000); c) K. Schrödter et al., "Phosphoric Acid and Phosphates," Ullmann's Encyclopedia of Industrial Chemistry (Wiley, Weinheim, Germany, 2008); d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014; e) H. Ohtake, S. Tsuneda, Phosphorus Recovery and Recycling, Springer, Singapore, 2018).

Die letzten Schritte zur Bildung industriell relevanter Oxyphosphorverbindungen umfassen die Alkoholyse oder Hydrolyse, die Arbuzov-Reaktion, oder die Grignard-Reaktion. Die relevanten Reaktionsschritte sind im Folgenden Schema 1 gezeigt.

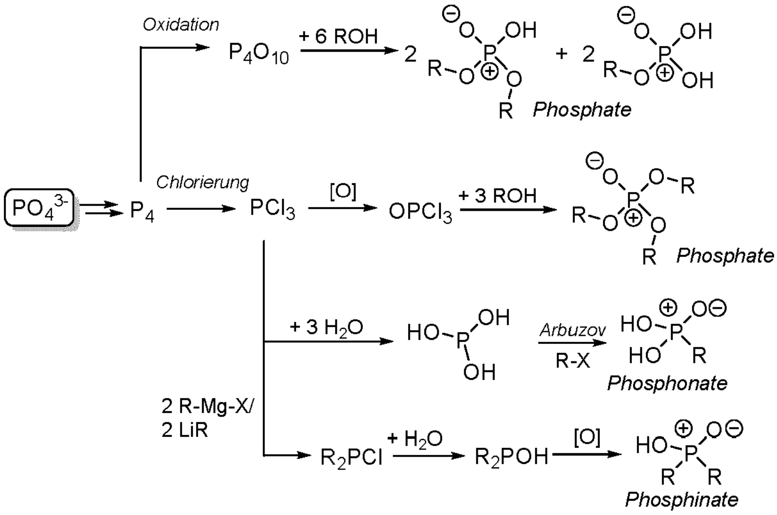


Schema 1: Synthese industriell sowie forschungsrelevanter Oxyphosphorverbindungen.

Bei diesen Reaktionen fallen große Mengen an Abfällen an. Außerdem verbraucht die heutige Phosphorchemie enorme Mengen Energie, um das nicht erneuerbare Rohstoffphosphat ($PO_4^{3-}$) erst zu reduzieren ($P_4$), um es anschließend zu chlorieren ($PCl_3$) oder zu reoxidieren ($P_4O_{10}$, $POCl_3$).

Zusammenfassend lässt sich sagen, dass die heutige Aufarbeitung des Phosphaterzes durch den elektrothermischen Prozess, gefolgt von Oxidation, Chlorierung oder Oxychlorierung, äußerst energieintensiv ist und große Mengen Abfall produziert. Dabei wird das Phosphaterz erst sehr aufwendig zu $P_4$ reduziert und dieses wiederum in die Grundchemikalien $P_4O_{10}$, $PCl_3$ und $OPCl_3$ umgewandelt. Phosphortrichlorid ($PCl_3$) und Phosphorylchlorid ($OPCl_3$) sind ätzende, toxische und flüchtige Flüssigkeiten. Diese Verbindungen werden in nachfolgenden Transformationsreaktionen wie Hydrolyse, Alkoholyse und Salzmetathese verwendet, um Phosphorchemikalien und Feinchemikalien für den akademischen und pharmazeutischen Bereich zu erhalten. Letztendlich gelangt ein großer Teil der Chloratome, die bei der Chlorierung von $P_4$ mit Chlorgas entstehen, in Salzabfälle ohne jeden kommerziellen Wert.

Die bekannten Verfahren sind also vor allem sehr energieintensiv, sind schwer zu handhaben wegen des Einsatzes korrosiver, toxischer und flüchtiger Flüssigkeiten bzw. Gase, und produzieren große Mengen Abfall. Dies zählt nach wie vor zu den größten Problemen der Phosphorchemie (siehe: a) Emsley, J. The 13th Element: The Sordid Tale of Murder, Fire, and Phosphorus; John Wiley & Sons, Inc.: New York, 2000; b) H. Diskowski, T. Hofmann, "Phosphorus," Ullmann's Encyclopedia of Industrial Chemistry (Wiley, 2000); c) K. Schrödter et al., "Phosphoric Acid and Phosphates," Ullmann's Encyclopedia of Industrial Chemistry (Wiley, Weinheim, Germany, 2008); d) O. Gantner, W. Schipper, J. J. Weigand, in Sustainable Phosphorus Management, 1st ed. (Eds.: R. W. Scholz, A. H. Roy, F. S. Brand, D. Hellums, A. E. Ulrich), Springer Netherlands, 2014; e) H. Ohtake, S. Tsuneda, Phosphorus Recovery and Recycling, Springer, Singapore, 2018).

Es besteht daher ein großer Bedarf an Reaktionsverfahren, die in der Lage sind, mindestens einen der oben genannten Nachteile zu überwinden.

In diesem Zusammenhang haben Cummins und Mitarbeiter, ausgehend von Tetrabutylammoniumtrimetaphosphat ($[nBu_4N]_3[P_3O_9]$), eine Synthese zu Bis(trichlorosilyl)phosphid als Tetrabutylammoniumsalz ($[nBu_4N][(SiCl_3)_2P]$) entwickelt, woraus sich eine Reihe weiterer relevanter Phosphorchemikalien synthetisieren lassen. Hierzu wird Tetrabutylammoniumtrimetaphosphat ($[nBu_4N]_3[P_3O_9]$) in einem Stahlreaktor in *neat* Trichlorosilan ($HSiCl_3$; Siedepunkt 32 °C) bei 100 °C für 72 h reagiert. Dies liefert das Salz $[nBu_4N][(SiCl_3)_2P]$ in 65% Ausbeute (siehe: M. B. Geeson, C. C. Cummins, Science, 2018, 359, 1383). Nachteile dieser Methode sind: a) der Kationenaustausch von Natrium ($Na^+$) zu Tetrabutylammonium ($[nBu_4N]^+$), um die Löslichkeit von $[P_3O_9]^{3-}$ zu erhöhen, b) die Reaktion mit der pyrophoren, ätzenden und giftigen Flüssigkeit $HSiCl_3$ (Siedepunkt 32 °C), die c) bei hydrothermalen Bedingungen (100 °C) in einem

Stahlreaktor durchgeführt wird, sowie d) die lange Reaktionsdauer von 72 h.

Dennoch bietet dieser Ansatz eine alternative und im Labormaßstab durchführbare Möglichkeit, aus Metaphosphaten $[P_3O_9]^{3-}$ Phosphorchemikalien darzustellen. Dies sollte laut Cummins und Mitarbeiter dazu anregen, alternative Methoden zu erforschen (siehe: M. B. Geeson, C. C. Cummins, ACS Cent. Sci. 2020, 6, 848).

Die in EP 4 183 742 A1 offenbarte Erfindung löst bereits mehrere der oben genannten Probleme, indem ein Verfahren bereitgestellt wird, das es erlaubt, auf direktem Weg ausgehend von einer sogenannten Phosphat-Verbindung (z.B. Phosphat ($PO_4^{3-}$) oder Phosphorsäure ($H_3PO_4$)) zu den gewünschten Oxyphosphorverbindungen in der Oxidationsstufe +V zu gelangen, ohne vorherigen Wechsel der Oxidationsstufe. Zentraler Bestandteil ist dabei die Synthese eines stickstoffhaltigen Phosphor(V)-Präkursors, der mit geeigneten Nucleophilen zu den gewünschten Oxyphosphorverbindungen, wie den Organophosphaten (Phosphorsäureestern) umgesetzt werden kann. Dieser stickstoffhaltige Phosphor(V)-Präkursor ist bereits bekannt, allerdings erfüllt dessen Synthese nicht die gestellten Anforderungen (siehe P. Rovnanik, L. Kapiĉka, J. Taraba, M. Ĉerník, *Inorg. Chem.* **2004,** *43,* 2435). Die Phosphat-Verbindung enthält gemäß der in der genannten Patentanmeldung angegebenen Definition ein Phosphat, das mindestens ein Phosphoratom der Oxidationsstufe +V enthält, das an vier Sauerstoffatome kovalent gebunden ist, und nur aus Phosphoratomen und Sauerstoffatomen besteht. Der Begriff Phosphat-Verbindung beschreibt alle Salze und die durch (teilweise) Protonierung erhältlichen Säuren der unter den Begriff Phosphat fallenden Phosphate, aber auch Phosphorpentaoxid. Der stickstoffhaltige Phosphor(V)-Präkursor wird dabei hergestellt, indem eine Phosphat-Verbindung (z.B. $H_3PO_4$) mit einem Sauerstoffakzeptor (z.B. Trifluormethansulfonsäureanhydrid) in Gegenwart einer Lewis-Base, die zur Koordination über ein Stickstoffatom fähig ist (z.B. Pyridin) umgesetzt wird. Dabei wird formal zweimal ein Sauerstoffion ($O^{2-}$) pro Phosphoratom eliminiert und vom Sauerstoffakzeptor aufgenommen. Die beiden freien Koordinationsstellen am Phosphoratom werden durch zwei Äquivalente der Lewis-Base eingenommen unter Bildung des stickstoffhaltigen Phosphor(V)-Präkursors.

A. Osumah, R. Krishnamurthy, ChemBioChem., 2021, 22, 3001-3009 ist ein Review Artikel zur Synthese des Diamidophosphat-Anions ($[O_2P(NH_2)_2]^-$) aus Phosphorylchlorid ($OPCl_3$) oder Trimetaphosphat ($[P_3O_9]^{3-}$), wobei die Syntheserouten die Verwendung wässriger Ammoniaklösungen beinhalten. Die Verwendung von ($[O_2P(NH_2)_2]^-$) als Phosphorylierungsreagenz von Zuckerderivaten (beispielsweise Inositol oder Nukleoside) wird beschrieben, allerdings in wässrigen Lösungen und mit geringer Selektivität. Die Selektivität der Phosphorylierungen kann durch Zugabe von Imidazol oder durch Verwendung von ($[O_2P(NMe_2)_2]^-$) in NMP (N-Methyl-2-pyrrolidon) und Dimethylzinndichlorid ($Me_2SnCl_2$) als Katalysator erhöht werden.

P. Rovnanik, L. Kapiĉka, J. Taraba, M. Ĉerník, *Inorg. Chem.,* **2004,** *43*, 2435-2442 beschreibt die Dismutation der beiden Phosphorylhalogenide $OPCl_3$ und $OPBr_3$ zu $[(DMAP)_2PO_2]^+$ und $[(Pyr)_2PO_2]^+$ als Chlorid bzw. Bromid Salz unter Verwendung der Basen 4-Dimethylaminopyridin (DMAP) und Pyridin (Pyr). Als stöchiometrisch anfallende Nebenprodukte entstehen jeweils die Halogenphosphorane $PCl_5$ sowie $PBr_5$.

E. Thilo, Angew. Chem. Int. Ed., 1965, 4, 1061-1071 ist ein Übersichtsartikel über kondensierte Phosphate, wie Metaphosphate, Polyphosphate und Ultraphosphate, deren Zusammensetzung, Eigenschaften und wechselseitige Verbindung. Verschiedene kondensierte Phosphate können ineinander überführt werden, wobei zyklische Phosphate (Metaphosphate), welche durch $PO_3^-$-Anionen verknüpft sind, durch thermische Entwässerung erhalten werden. Metaphosphate können durch verschiedene Nukleophile, wie $OH^-$, $F^-$, $NH_2^-$ und $NR_2^-$, zu Peroxotriphosphat, Fluorotriphoshat und Amidotriphosphat geöffnet werden. Mit einem Überschuss $NH_3$ wird Pyrophosphat ($[P_2O_7]^{4-}$) und Diamidomonophosphat ($[O_2P(NH_2)_2]^-$) gebildet.

W. Feldmann, E. Thilo, Z. Anorg. Allg. Chem., 1964, 328, 113-126 beschreibt Reaktionen von Trimetaphosphat ($[P_3O_9]^{3-}$) und Tetrametaphosphat ($[P_4O_{12}]^{4-}$) mit wässrigen Ammoniak-Lösungen zu den offenkettigen Verbindungen Amidotriphosphat und Amidotetraphosphat. Nach einiger Zeit stellt sich hier ein Gleichgewicht ein, sodass die zyklischen Metaphosphate wieder zurückgebildet werden. Die weitere Zugabe von Ammoniak zu dem offenkettigen Amidotriphosphat führt zur Bildung von Pyrophosphat ($[P_2O_7]^{4-}$) und Diamidophosphat ($[O_2P(NH_2)_2]^-$).

Bezüglich der sekundären Phosphorressourcen ist festzustellen, dass Syntheserouten aus recycelten Phosphormaterialen zur Herstellung wertvoller Phosphorchemikalien bisher nicht bekannt sind oder nur von sehr geringer Bedeutung sind. Dies liegt auch am Mangel bzw. der Abwesenheit chemischer und atomökonomischer Verwertungsstrategien.

Vielmehr werden viele Phosphorverbindungen in der Industrie nach deren Einsatz in der Regel nicht chemisch recycelt, sondern in den jeweiligen Materialien auf Deponien gelagert, als Füllmaterial verwendet oder in einigen Fällen auch thermisch verwertet, also verbrannt (siehe D. Lucas et al. Environ. Eng. Sci. 2018, 35, 573). Dies verschärft den Mangel an Phosphorressourcen zusätzlich. Zum Beispiel werden Phosphatverbindungen, die als Flammschutzadditiv in Polymeren eingesetzt werden (TEP, Triethylphosphat; oder TCPP, Tris(1-chlor-2-propyl)phosphat) oder Extraktionsmittel zur Metallrückgewinnung (TBP, Tributylphosphat; D2EHPA, Bis(2-ethylhexyl)phosphat) in der Regel nicht chemisch wiederverwertet, sondern in den jeweiligen Materialien auf Deponien gelagert, als Füllmaterial verwendet oder thermisch verwertet.

Eine Wiederverwertung phosphorhaltiger Altlasten zu wertvollen Phosphorchemikalien, die sowohl unter chemischen als auch unter atomökonomischen Gesichtspunkten vorteilhaft ist, ist bisher gänzlich unbekannt.

Es besteht daher ein großer Bedarf an Reaktionsverfahren, die in der Lage sind, sekundäre Phosphorressourcen nutzbar zu machen und die gleichzeitig bezüglich des Energie- und Chemikalieneinsatzes akzeptabel sind.

Die vorliegende Erfindung löst mehrere der oben genannten Probleme, indem ein Verfahren bereitgestellt wird, das es erlaubt, auf direktem Weg ausgehend von Organophosphaten (Phosphorsäureestern) zu den gewünschten Oxyphosphorverbindungen in der Oxidationsstufe +V zu gelangen, ohne vorherigen Wechsel der Oxidationsstufe.

Dabei erfolgt die direkte Umwandlung der sekundären Phosphorressource (Phosphorsäureester) in die gewünschten Oxyphosphorverbindungen unter Beibehaltung der Oxidationsstufe +V des eingesetzten Phosphoratoms.

Es wird demgemäß durch das erfindungsgemäße Verfahren ein neuer Weg zur Synthese industriell und akademisch relevanter Oxyphosphorverbindungen ausgehend von sekundären Phosphorressourcen bereitgestellt. Dadurch werden Zeit, Energie, Kosten, chemischer Abfall sowie gefährliche Reagenzien (wie $Cl_2$ oder $HSiCl_3$) eingespart. Außerdem werden die knappen primären Phosphorressourcen geschont, indem ein Teil der sekundären Phosphatressourcen (Phosphorsäureester) nicht in den jeweiligen Materialien ungenutzt gelagert, als Füllmaterial verwendet oder gar verbrannt werden, sondern chemisch wiederverwertet werden.

Die vorliegende Erfindung ermöglicht es damit, eine atom- und energieeffiziente Lösung zur Herstellung von Oxyphosphorverbindungen der Oxidationsstufe +V direkt aus Phosphorsäureestern anzubieten.

Zentraler Bestandteil der vorliegenden Erfindung ist dabei die Synthese stickstoffhaltiger Phosphor(V)-Präkursoren. Diese können mit geeigneten Nucleophilen zu den gewünschten Oxyphosphorverbindungen, wie Organophosphaten (Phosphorsäureestern) und Phosphinaten umgesetzt werden.

Die vorliegende Erfindung ist demgemäß auf ein Verfahren zur Synthese stickstoffhaltiger Phosphor(V)-Präkursoren der Formel (I) gerichtet,

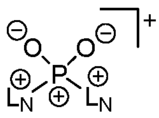
Formel (I),

wobei das Verfahren die folgenden Schritte in der angegebenen Reihenfolge umfasst:

a) Bereitstellung eines Phosphorsäureesters;
b) Umsetzung des Phosphorsäureesters aus Schritt a) mit einem Sauerstoffakzeptor in Gegenwart einer Lewis-Base $L_N$, die zur Koordination über ein Stickstoffatom fähig ist,

wobei der Sauerstoffakzeptor das Kation eines Sulfonsäureanhydrids gemäß der Formel (II) ist und das Sulfonsäureanhydrid gemäß der Formel (III) ist,

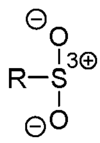
Formel (II),

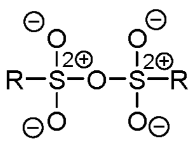
Formel (III),

wobei gemäß Schritt b) alternativ entweder

b1) der Phosphorsäureester aus Schritt a) mit einem Sulfonsäureanhydrid gemäß der Formel (III) in Gegenwart einer Lewis-Base $L_N$ zur Reaktion gebracht wird, oder
b2) der Phosphorsäureester aus Schritt a) mit dem Reaktionsprodukt eines Sulfonsäureanhydrids gemäß der Formel (III) mit einer Lewis-Base $L_N$ zur Reaktion gebracht wird, wobei das genannte Reaktionsprodukt gemäß der Formel (IV) ist

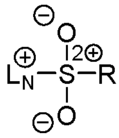
Formel (IV),

wobei R ein aliphatischer oder aromatischer Kohlenwasserstoffrest ist, der Heteroatome enthalten kann, wobei die Anzahl der Kohlenstoffatome des Rests R von 1 bis 21 ist, und die Heteroatome ausgewählt sind aus der Gruppe bestehend aus Sauerstoff, Stickstoff, Fluor, Chlor, Brom, lod, und deren Mischungen,
wobei die Lewis-Base $L_N$, die zur Koordination über ein Stickstoffatom fähig ist, eine stickstoffhaltige heteroaromatische Verbindung ist, die einen sechsgliedrigen heteroaromatischen Ring enthält, der ein zur Koordination fähiges Stickstoffatom enthält, wobei die Anzahl der Kohlenstoffatome der Lewis-Base $L_N$ von 4 bis 19 ist,
wobei der Phosphorsäureester aus Schritt a) gemäß einer der Formeln (Va), (Vb) und (Vc) ist

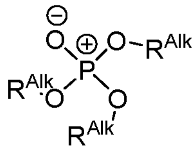
Formel (Va)

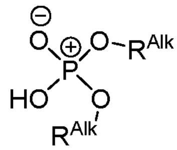
Formel (Vb)

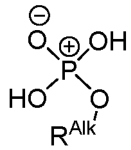
Formel (Vc),

wobei $R^{Alk}$ ein Kohlenwasserstoffrest ist, der Heteroatome enthalten kann.

Der in dem Verfahren zur Synthese stickstoffhaltiger Phosphor(V)-Präkursoren der Formel (I) gemäß Schritt b) wirksame Sauerstoffakzeptor der Formel (II) wird demgemäß entweder in Form eines Sulfonsäureanhydrids der Formel (III) eingesetzt, oder wird alternativ eingesetzt in Form des Reaktionsprodukts gemäß der Formel (IV), das zuvor durch Reaktion eines Sulfonsäureanhydrids der Formel (III) mit einer Lewis-Base $L_N$ hergestellt worden ist. In beiden Fällen wird der wirksame Sauerstoffakzeptor der Formel (II) während der Reaktion gemäß Schritt b) in situ freigesetzt und reagiert mit dem Phosphorsäureester aus Schritt a) in Gegenwart einer Lewis-Base $L_N$.

Der entstehende stickstoffhaltige Phosphor(V)-Präkursor der Formel (I) ist ein einfach positiv geladenes Kation und kann mit einem geeigneten Gegenion isoliert werden.

Das Verfahren zur Synthese stickstoffhaltiger Phosphor(V)-Präkursoren der Formel (I) gemäß der vorliegenden Erfindung lässt sich demgemäß mittels der folgenden allgemeinen Reaktionsgleichungen beschreiben:

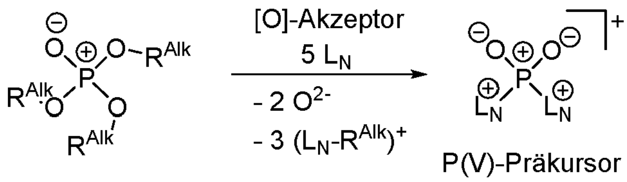


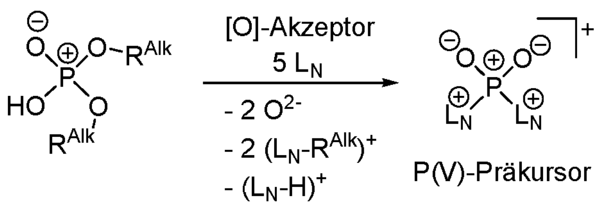


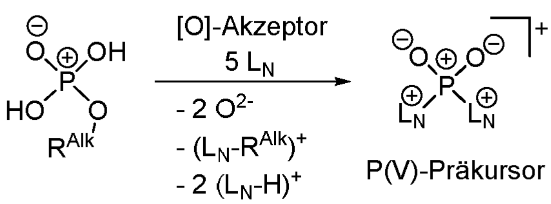


In den gezeigten Reaktionsgleichungen wird ein Phosphoratom zweifach desoxygeniert, das heißt, es wird formal insgesamt zweimal ein Sauerstoffion ($O^{2-}$) pro Phosphoratom eliminiert und vom Sauerstoffakzeptor aufgenommen. Der Substituent $R^{Alk}$ bzw. H wird auf die Lewis-Base $L_N$ übertragen. Die beiden freien Koordinationsstellen am Phosphoratom werden durch zwei Äquivalente der Lewis-Base $L_N$ eingenommen unter Bildung des stickstoffhaltigen Phosphor(V)-Präkursors der Formel (I). Dabei erfolgt die Koordination der Lewis-Base $L_N$ über das freie Elektronenpaar eines Stickstoffatoms unter Bildung von zwei Phosphor-Stickstoff-Bindungen. Im Falle des Triesters werden drei Äquivalente eines Pyridinium- bzw. Ammoniumkations $[L_N\text{-}R^{Alk}]^+$ gebildet, im Falle des Diesters zwei Äquivalente eines Pyridinium- bzw. Ammoniumkations $[L_N\text{-}R^{Alk}]^+$ sowie ein Äquivalent eines Pyridinium- bzw. Ammoniumkations $[L_N\text{-}H]^+$und im Falle des Monoesters ein Äquivalent eines Pyridinium- bzw. Ammoniumkations $[L_N\text{-}R^{Alk}]^+$sowie zwei Äquivalente eines Pyridinium- bzw.

Ammoniumkations $[L_N\text{-}H]^+$.

Wie oben erwähnt, ist im Verfahren zur Synthese stickstoffhaltiger Phosphor(V)-Präkursoren der Formel (I) gemäß der vorliegenden Erfindung der Phosphorsäureester aus Schritt a) gemäß einer der Formeln (Va), (Vb) und (Vc), wobei $R^{Alk}$ ein Kohlenwasserstoffrest ist, der Heteroatome enthalten kann.

Dabei können im Falle der Formeln (Va) und (Vb) die einzelnen Kohlenwasserstoffreste $R^{Alk}$ identisch sein oder unterschiedlich sein.

Unabhängig davon können im Falle der Formel (Va) zwei oder drei Kohlenwasserstoffreste $R^{Alk}$, im Falle der Formel (Vb) zwei Kohlenwasserstoffreste $R^{Alk}$, gemeinsam eine Brücke zwischen an dasselbe Phosphoratom gebundenen Sauerstoffatomen bilden.

Die Natur des Kohlenwasserstoffrests $R^{Alk}$, wie die Anzahl der Kohlenstoffatome, die Anzahl und Art der Heteroatome, der Grad der Sättigung und das Vorhandensein oder die Anzahl und der Umfang aliphatischer und aromatischer Gruppen, ist beliebig. Wenn ein Phosphorsäureester gemäß einer der Formeln (Va), (Vb) und (Vc) herstellbar ist, was nicht Gegenstand der vorliegenden Erfindung ist, wird dieser auch im Schritt a) des Verfahrens zur Synthese stickstoffhaltiger Phosphor(V)-Präkursoren der Formel (I) gemäß der vorliegenden Erfindung bereitgestellt werden können und auch gemäß Schritt b) des Verfahrens zur Synthese stickstoffhaltiger Phosphor(V)-Präkursoren der Formel (I) gemäß der vorliegenden Erfindung zu einem stickstoffhaltigen Phosphor(V)-Präkursoren der Formel (I) umgesetzt werden können.

In gängigen und hier verwendbaren Phosphorsäureestern ist die Anzahl der Kohlenstoffatome von jedem $R^{Alk}$ von 1 bis 50 oder von 1 bis 25 oder von 1 bis 12 oder von 1 bis 8 oder von 1 bis 4.

In gängigen und hier verwendbaren Phosphorsäureestern ist die Anzahl der Kohlenstoffatome aller $R^{Alk}$ gemeinsam in einer der Formeln (Va), (Vb) oder (Vc) von 1 bis 50 oder von 1 bis 25 oder von 1 bis 18 oder von 1 bis 12.

In gängigen und hier verwendbaren Phosphorsäureestern sind die Heteroatome von $R^{Alk}$ ausgewählt aus der Gruppe bestehend aus Stickstoff, Sauerstoff, Schwefel, Fluor, Chlor, und Brom.

In gängigen und hier verwendbaren Phosphorsäureestern sind die Heteroatome von $R^{Alk}$ ausgewählt aus der Gruppe bestehend aus Sauerstoff, Stickstoff und Fluor.

In gängigen und hier verwendbaren Phosphorsäureestern enthält der Rest $R^{Alk}$ bzw. enthalten die Reste $R^{Alk}$ keine weiteren Heteroatome.

In gängigen und hier verwendbaren Phosphorsäureestern ist die Anzahl der Kohlenstoffatome von jedem $R^{Alk}$ von 1 bis 12, ist die Anzahl der Kohlenstoffatome aller $R^{Alk}$ gemeinsam in einer der Formeln (Va), (Vb) oder (Vc) von 1 bis 25, und sind die Heteroatome von $R^{Alk}$ ausgewählt aus der Gruppe bestehend aus Sauerstoff, Stickstoff und Fluor.

In gängigen und hier verwendbaren Phosphorsäureestern ist die Anzahl der Kohlenstoffatome von jedem $R^{Alk}$ von 1 bis 8, ist die Anzahl der Kohlenstoffatome aller $R^{Alk}$ gemeinsam in einer der Formeln (Va), (Vb) oder (Vc) von 1 bis 25, und sind die Heteroatome von $R^{Alk}$ ausgewählt aus der Gruppe bestehend aus Sauerstoff, Stickstoff und Fluor.

In gängigen und hier verwendbaren Phosphorsäureestern ist die Anzahl der Kohlenstoffatome von jedem $R^{Alk}$ von 1 bis 8, ist die Anzahl der Kohlenstoffatome aller $R^{Alk}$ gemeinsam in einer der Formeln (Va), (Vb) oder (Vc) von 1 bis 25, und enthält der Rest $R^{Alk}$ bzw. enthalten die Reste $R^{Alk}$ keine weiteren Heteroatome.

In gängigen und hier verwendbaren Phosphorsäureestern ist die Anzahl der Kohlenstoffatome von jedem $R^{Alk}$ von 1 bis 4, ist die Anzahl der Kohlenstoffatome aller $R^{Alk}$ gemeinsam in einer der Formeln (Va), (Vb) oder (Vc) von 1 bis 12, und enthält der Rest $R^{Alk}$ bzw. enthalten die Reste $R^{Alk}$ keine weiteren Heteroatome.

Gängige und hier verwendbare Phosphorsäureester sind insbesondere auch solche, die durch Veresterung einwertiger Alkohole, Diole, Polyole, Zuckeralkohole und Zucker, einschließlich Nukleoside, erhalten werden können.

Es ist gemäß der vorliegenden Erfindung bevorzugt, dass ein Kohlenstoffatom eines Kohlenwasserstoffrests $R^{Alk}$ in einer der Formeln (Va), (Vb) oder (Vc), das direkt an das Sauerstoffatom der Esterbindung des Phosphorsäureesters gebunden ist (C-1), an drei weitere Atome gebunden ist. Es wird hier insofern davon gesprochen, dass ein derartiges Kohlenstoffatom (C-1) einen gesättigten aliphatischen Zustand besitzt bzw. dass es $sp^3$-hybridisiert ist. In diesem Zusammenhang ist es weiterhin bevorzugt, dass unter diesen drei weiteren Atomen zwei oder drei Wasserstoffatome sind.

Es ist in diesem Zusammenhang gemäß der vorliegenden Erfindung weiterhin bevorzugt, dass das genannte

Kohlenstoffatom (C-1) in allen Kohlenwasserstoffresten $R^{Alk}$ einen gesättigten aliphatischen Zustand besitzt bzw. dass es $sp^3$-hybridisiert ist, weiterhin bevorzugt, dass unter den genannten drei weiteren Atomen zwei oder drei Wasserstoffatome sind. Dies gilt demgemäß für Kohlenwasserstoffreste $R^{Alk}$ in jeder der Formeln (Va), (Vb) oder (Vc).

Es ist in diesem Zusammenhang gemäß der vorliegenden Erfindung weiterhin bevorzugt, dass jeder der Kohlenwasserstoffreste $R^{Alk}$ in einer der Formeln (Va), (Vb) oder (Vc) ein gesättigter aliphatischer Kohlenwasserstoffrest ist.

Es ist in diesem Zusammenhang gemäß der vorliegenden Erfindung weiterhin bevorzugt, dass jeder der Kohlenwasserstoffreste $R^{Alk}$ in einer der Formeln (Va), (Vb) oder (Vc) ein gesättigter aliphatischer Kohlenwasserstoffrest ist, der keine Heteroatome enthält.

Wie oben definiert, wird das Phosphoratom des Phosphorsäureesters zweifach desoxygeniert und die beiden freien Koordinationsstellen am Phosphoratom werden durch zwei Äquivalente der Lewis-Base $L_N$ eingenommen unter Bildung des stickstoffhaltigen Phosphor(V)-Präkursors der Formel (I). Daraus ergibt sich, dass der Phosphorsäureester mit mindestens zwei Äquivalenten eines Sulfonsäureanhydrids gemäß der Formel (III) in Gegenwart von mindestens zwei Äquivalenten einer Lewis-Base $L_N$ zur Reaktion gebracht werden muss oder alternativ der Phosphorsäureester mit mindestens zwei Äquivalenten des Reaktionsprodukts gemäß Formel (IV) zur Reaktion gebracht werden muss.

Die jeweiligen Äquivalente beziehen sich dabei auf die Äquivalentmenge der Phosphoratome des Phosphorsäureesters. Die Stoffmenge der Reaktionspartner muss selbstverständlich an die Menge der Phosphoratome des Phosphorsäureesters angepasst werden.

Das Sulfonsäureanhydrid wird üblicherweise in mindestens einem halben Äquivalent zugesetzt und höchstens in zehn Äquivalenten.

Die Lewis-Base $L_N$ wird üblicherweise in mindestens zwei Äquivalenten zugesetzt, bevorzugt in fünf Äquivalenten, und höchstens in zehn Äquivalenten. Bei Verwendung eines Lösemittels, das der Definition einer Lewis-Base $L_N$ entspricht, wobei keine zusätzliche Lewis-Base $L_N$ eingesetzt wird, ist die Äquivalentmenge der Lewis-Base $L_N$ selbstverständlich höher, üblicherweise höchstens 100 Äquivalente

In der alternativen Variante wird das Reaktionsprodukt gemäß der Formel (IV) üblicherweise in mindestens zwei Äquivalenten zugesetzt und höchstens in zehn Äquivalenten. Bevorzugt werden in dieser Variante weitere drei Äquivalente Lewis-Base $L_N$ zugesetzt.

Die Umsetzung des Phosphorsäureesters mit einem Sauerstoffakzeptor erfolgt gemäß einer bevorzugten Ausführungsform der vorliegenden Erfindung in Gegenwart von mindestens fünf Äquivalenten einer Lewis-Base $L_N$. Die Umsetzung des Phosphorsäureesters mit einem Sauerstoffakzeptor erfolgt üblicherweise in Gegenwart von höchstens 100 Äquivalenten einer Lewis-Base $L_N$.

Wie schon weiter oben erwähnt, ist der Rest R des Sulfonsäureanhydrids der Formel (III) (und dementsprechend der Rest R in den Formeln (II) und (IV)) ein aliphatischer oder aromatischer Kohlenwasserstoffrest, der Heteroatome enthalten kann, wobei die Anzahl der Kohlenstoffatome von 1 bis 21 ist, und die Heteroatome - falls vorhanden - ausgewählt sind aus der Gruppe bestehend aus Sauerstoff, Stickstoff, Fluor, Chlor, Brom, Iod, und deren Mischungen. Außer diesen genannten Heteroatomen enthält der Rest R keine weiteren Heteroatome.

Bevorzugt sind die Heteroatome - falls vorhanden - ausgewählt sind aus der Gruppe bestehend aus Sauerstoff, Stickstoff, Fluor, Chlor, Brom, und Iod, das heißt, der Rest R enthält nicht Heteroatome unterschiedlicher Ordnungszahl.

Bevorzugt ist die Anzahl der Heteroatome im Rest R nicht höher als drei.

Für den Fall, dass R ein aliphatischer Kohlenwasserstoffrest ist, ist die Anzahl der Kohlenstoffatome bevorzugt von 1 bis 11, weiterhin bevorzugt von 1 bis 6. Unabhängig davon ist weiterhin bevorzugt, dass Heteroatome - falls vorhanden - ausgewählt sind aus der Gruppe bestehend aus Sauerstoff, Stickstoff und Fluor, und deren Mischungen, und besonders bevorzugt, dass Heteroatome - falls vorhanden - ausgewählt sind aus der Gruppe bestehend aus Sauerstoff, Stickstoff und Fluor, das heißt, der Rest R enthält nicht Heteroatome unterschiedlicher Ordnungszahl. In diesem Zusammenhang ist es besonders bevorzugt, dass der Rest R ausgewählt ist aus der Gruppe bestehend aus $C_1$-$C_6$-Alkyl, Cyclohexyl, $C_1$-$C_6$-Alkoxy, Trifluormethoxy, Trifluormethyl, $C_2F_5$, $C_2F_4H$, $C_3F_7$, $C_3F_6H$, $C_4F_9$, $C_4F_8H$, $C_5F_{11}$ und $C_5F_{10}H$. Der in diesem Zusammenhang am meisten bevorzugte aliphatische Kohlenwasserstoffrest R ist Trifluormethyl ($CF_3$).

Für den Fall, dass R ein aromatischer Kohlenwasserstoffrest ist, ist R bevorzugt definiert durch die folgende Formel (IIIa):

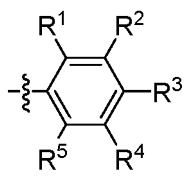

(IIIa),

wobei die Reste $R^1$, $R^2$, $R^3$, $R^4$, und $R^5$ unabhängig voneinander ausgewählt sind aus der Gruppe bestehend aus

Wasserstoff, $C_1$-$C_3$-Alkyl, $C_1$-$C_3$-Alkoxy, Fluor, Chlor, Brom, Iod, der Nitrogruppe, und Trifluormethyl. In diesem Zusammenhang sind besonders bevorzugt die Reste $R^1$, $R^2$, $R^3$, $R^4$, und $R^5$ unabhängig voneinander ausgewählt aus der Gruppe bestehend aus Wasserstoff, Methyl, Methoxy, Fluor, Chlor, der Nitrogruppe, und Trifluormethyl. In dieser bevorzugten Gruppe sind die Reste $R^1$, $R^2$, $R^3$, $R^4$, und $R^5$ weiterhin bevorzugt aus den folgenden Kombinationen ausgewählt:

$R^1$, $R^2$, $R^3$, $R^4$, $R^5$ = H,
$R^1$, $R^2$, $R^3$, $R^4$, $R^5$ =$CH_3$,
$R^1$, $R^2$, $R^3$, $R^4$ = H und $R^5$ = $CH_3$,
$R^1$, $R^2$, $R^3$, $R^4$ = H und $R^5$ = F,
$R^1$, $R^2$, $R^3$, $R^4$ = H und $R^5$ = Cl,
$R^1$, $R^2$, $R^3$, $R^4$ = H und $R^5$ = $OCH_3$,
$R^1$, $R^2$, $R^3$, $R^4$ = H und $R^5$ = $NO_2$,
$R^1$, $R^2$, $R^3$, $R^4$ = H und $R^5$ = $CF_3$,
$R^1$, $R^2$, $R^4$ = H und $R^3$, $R^5$ = $CH_3$,
$R^2$, $R^4$ = H und $R^1$, $R^3$, $R^5$ = $CH_3$,
$R^2$, $R^3$, $R^5$ = H und $R^1$, $R^4$ = $CH_3$, oder
$R^1$, $R^2$, $R^4$, $R^5$ = H und $R^3$ = $CH_3$.

Die in diesem Zusammenhang am meisten bevorzugte Kombination ist:
$R^1$, $R^2$, $R^4$, $R^5$ = H und $R^3$ = $CH_3$.

Das am meisten bevorzugte Sulfonsäureanhydrid der Formel (III) mit einem aliphatischen Kohlenwasserstoffrest R ist demgemäß Trifluormethansulfonsäureanhydrid ($Tf_2O$) und dementsprechend ist das am meisten bevorzugte Kation eines Sulfonsäureanhydrids gemäß der Formel (II) mit einem aliphatischen Kohlenwasserstoffrest R das Triflylkation $F_3CSO_2^+$ ($Tf^+$).

Das am meisten bevorzugte Sulfonsäureanhydrid der Formel (III) mit einem aromatischen Kohlenwasserstoffrest R ist demgemäß p-Toluolsulfonsäureanhydrid und dementsprechend ist das am meisten bevorzugte Kation eines Sulfonsäureanhydrids gemäß der Formel (II) mit einem aromatischen Kohlenwasserstoffrest R das Tosylkation $H_3C$-$C_6H_4$-$SO_2^+$ ($Ts^+$).

Das am meisten bevorzugte Sulfonsäureanhydrid der Formel (III) ist Trifluormethansulfonsäureanhydrid ($Tf_2O$) und dementsprechend ist das am meisten bevorzugte Kation eines Sulfonsäureanhydrids gemäß der Formel (II) das Triflylkation $F_3CSO_2^+$ ($Tf^+$).

Im am meisten bevorzugten Verfahren gemäß der vorliegenden Erfindung desoxygenieren demgemäß zwei Äquivalente Triflylkation ein Phosphoratom des Phosphorsäureesters zweifach unter Bildung von zwei Äquivalenten Trifluormethansulfonat (Triflat, $OTf^-$).

Das Triflylkation ist daher der am meisten bevorzugte Sauerstoffakzeptor im Verfahren gemäß der vorliegenden Erfindung.

Das Triflylkation kann im Verfahren in Form des Trifluormethansulfonsäureanhydrids eingesetzt werden.

Alternativ zur Verwendung von Trifluormethansulfonsäureanhydrid kann zuvor Trifluormethansulfonsäureanhydrid, $Tf_2O$, mit der Lewis-Base $L_N$ umgesetzt werden. Das Reaktionsprodukt enthält das Triflylkation an die Lewis-Base $L_N$ gebunden als Salz des Triflatanions, $OTf^-$:

$$Tf_2O + L_N \longrightarrow L_N\text{-}Tf[OTf]$$

Die Reaktionsschemata der besonders bevorzugten Ausführungsformen unter Verwendung von Trifluormethansulfonsäureanhydrid sind im Folgenden gezeigt:

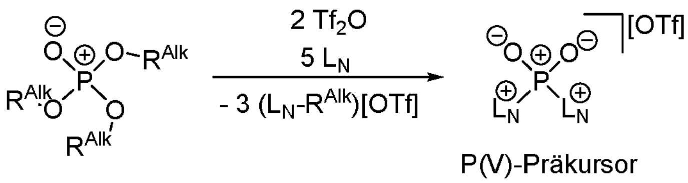


P(V)-Präkursor

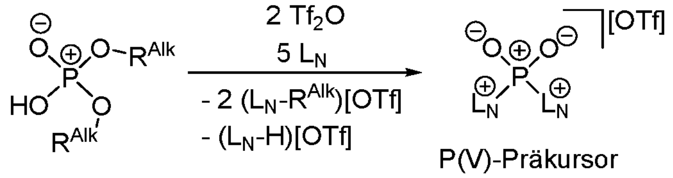


P(V)-Präkursor

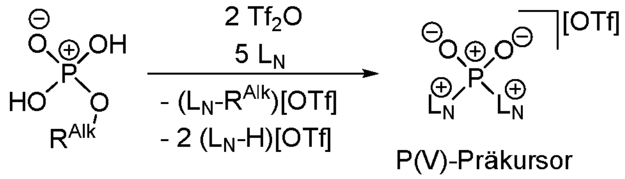


P(V)-Präkursor

Das Reaktionsschemata der alternativen besonders bevorzugten Ausführungsform unter Verwendung von [$L_N$-Tf][OTf] sind im Folgenden gezeigt:

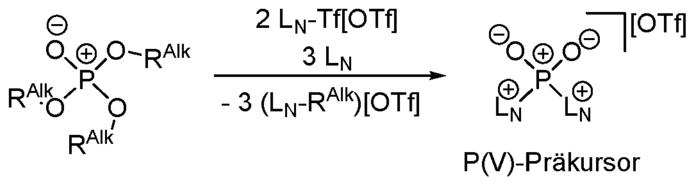


P(V)-Präkursor

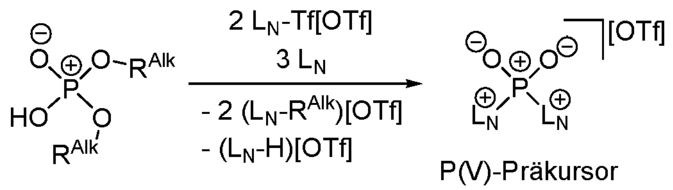


P(V)-Präkursor

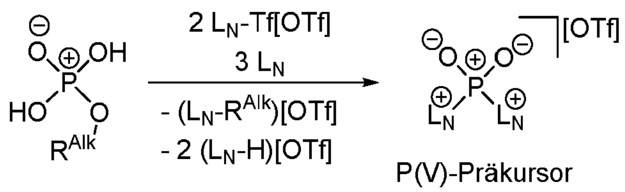


P(V)-Präkursor

Wie schon weiter oben erwähnt, ist die Lewis-Base $L_N$ zur Koordination über ein Stickstoffatom fähig, und ist eine stickstoffhaltige heteroaromatische Verbindung, die einen, das heißt mindestens einen, sechsgliedrigen heteroaromatischen Ring enthält, der ein, das heißt mindestens ein, zur Koordination fähiges Stickstoffatom enthält, und wobei die Anzahl der Kohlenstoffatome der Lewis-Base $L_N$ von 4 bis 19 ist.

Die Lewis-Base $L_N$ kann weitere Heteroatome enthalten, die ausgewählt sind aus der Liste bestehend aus Stickstoff, Sauerstoff, Schwefel, Fluor, Chlor, Brom, Iod, und deren Mischungen. Außer den genannten Heteroatomen enthält die Lewis-Base $L_N$ keine weiteren Heteroatome.

Die Lewis-Base $L_N$ enthält bevorzugt einen oder zwei der genannten sechsgliedrigen heteroaromatischen Ringe.

Die Lewis-Base $L_N$ enthält bevorzugt ein oder zwei Stickstoffatome.

Bevorzugt enthält die Lewis-Base $L_N$ einen oder zwei sechsgliedrige heteroaromatische Ringe und die Lewis-Base $L_N$ enthält pro sechsgliedrigem heteroaromatischen Ring im sechsgliedrigen heteroaromatischen Ring ein oder zwei zur Koordination fähige Stickstoffatome und die Lewis-Base $L_N$ enthält insgesamt ein oder zwei Stickstoffatome.

Die Lewis-Base $L_N$ enthält - falls Sauerstoffatome vorhanden sind - bevorzugt ein oder zwei Sauerstoffatome.

Die Sauerstoffatome der Lewis-Base $L_N$ sind - falls vorhanden - weiterhin bevorzugt Bestandteil von Methoxy- oder Ethoxygruppen.

Die Lewis-Base $L_N$ enthält bevorzugt nicht mehr als zwei Methoxy- oder Ethoxygruppen.

Die Lewis-Base $L_N$ enthält - falls diese Heteroatome vorhanden sind - bevorzugt ein, zwei, drei oder vier Heteroatome, die ausgewählt sind aus der Gruppe bestehend aus Fluor, Chlor, Brom, Iod, und deren Mischungen.

Die Lewis-Base $L_N$ enthält - falls diese Heteroatome vorhanden sind - bevorzugt ein, zwei, drei oder vier

Heteroatome, die ausgewählt sind aus der Gruppe bestehend aus Fluor, Chlor, Brom, Iod, das heißt, dass die Lewis-Base $L_N$ nicht Heteroatome dieser Gruppe mit unterschiedlicher Ordnungszahl enthält.

Die Lewis-Base $L_N$ enthält bevorzugt keinen Schwefel.

Die Lewis-Base $L_N$ enthält besonders bevorzugt unabhängig voneinander ein oder zwei Stickstoffatome, null, ein oder zwei Sauerstoffatome, null, ein, zwei, drei oder vier Heteroatome, die ausgewählt sind aus der Gruppe bestehend aus Fluor, Chlor, Brom, und Iod, und enthält darüber hinaus keine weiteren Heteroatome.

Die Lewis-Base $L_N$ ist bevorzugt ausgewählt aus der Gruppe bestehend aus Pyridinen, Picolinen, Lutidinen, Collidinen, Bipyridinen, Pyridazinen, Pyrimidinen, Pyrazinen, Chinolinen und Isochinolinen.

Die Lewis-Base $L_N$ ist weiterhin bevorzugt ausgewählt aus den folgenden Substanzen bzw. Substanzklassen: Pyridin, einfach oder mehrfach methyl-substituierte Pyridine wie Pentamethylpyridin, Picoline, Lutidine, und Collidine, einfach alkyl-substituierte Pyridine, wobei der Alkylrest zwischen 2 und 10 Kohlenstoffatome enthält, einfach phenylsubstituierte Pyridine, Aminopyridine, Dimethylaminopyridine, einfach oder zweifach methoxy- oder ethoxysubstituierte Pyridine, sowie einfach, zweifach oder dreifach halogen-substituierte Pyridine.

Bipyridin, einfach methyl-substituierte Bipyridine, einfach halogen-substituierte Bipyridine, zweifach methyl-substituierte Bipyridine, zweifach halogen-substituierte Bipyridine, vierfach methyl-substituierte Bipyridine, sowie vierfach halogen-substituierte Bipyridine.

Diazine wie Pyridazin, Pyrimidin und Pyrazin, einfach methyl-substituierte Pyridazine, einfach halogen-substituierte Pyridazine, zweifach methyl-substituierte Pyridazine, zweifach halogen-substituierte Pyridazine, dreifach methyl-substituierte Pyridazine, dreifach halogen-substituierte Pyridazine, vierfach methyl-substituiertes Pyridazin, vierfach halogen-substituiertes Pyridazin, einfach methyl-substituierte Pyrimidine, einfach halogen-substituierte Pyrimidine, zweifach methyl-substituierte Pyrimidine, zweifach halogen-substituierte Pyrimidine, dreifach methyl-substituierte Pyrimidine, dreifach halogen-substituierte Pyrimidine, vierfach methyl-substituiertes Pyrimidin, vierfach halogen-substituiertes Pyrimidin, einfach methyl-substituierte Pyrazine, einfach halogen-substituierte Pyrazine, zweifach methyl-substituierte Pyrazine, zweifach halogen-substituierte Pyrazine, dreifach methyl-substituierte Pyrazine, dreifach halogen-substituierte Pyrazine, vierfach methyl-substituiertes Pyrazin, sowie vierfach halogen-substituiertes Pyrazin,

Chinoline wie Chinolin, einfach methyl-substituierte Chinoline, zweifach methyl-substituierte Chinoline, dreifach methyl-substituierte Chinoline, vierfach methyl-substituierte Chinoline, einfach halogen-substituierte Chinoline, wobei gleichzeitig Substitution mit ein bis sechs Methylgruppen vorliegen kann, sowie siebenfach methyl-substituiertes Chinolin.

Isochinoline wie Isochinolin, einfach methyl-substituierte Isochinoline, zweifach methyl-substituierte Isochinoline, einfach halogen-substituierte Isochinoline, wobei gleichzeitig Substitution mit ein bis sechs Methylgruppen vorliegen kann, sowie siebenfach methyl-substituiertes Isochinolin.

Die Anzahl der Kohlenstoffatome der Lewis-Base $L_N$ ist bevorzugt von 4 bis 16, weiterhin bevorzugt von 4 bis 12, besonders bevorzugt von 5 bis 9.

Die Lewis-Base $L_N$ enthält weiterhin bevorzugt ein oder zwei Stickstoffatome und keine weiteren Heteroatome.

Gemäß einer besonders bevorzugten Ausführungsform der vorliegenden Erfindung ist die Lewis-Base $L_N$ ausgewählt aus der Gruppe bestehend aus Pyridin, 4-Dimethylaminopyridin, und deren Mischungen.

Die Lewis-Base $L_N$ kann sich auch erst während der Reaktion bilden, wenn wie oben beschrieben vor Durchführung des Verfahrens gemäß der vorliegenden Erfindung die Lewis-Base $L_N$ mit einem Sulfonsäureanhydrid wie am meisten bevorzugt Trifluormethansulfonsäureanhydrid, $Tf_2O$, umgesetzt wird. Das Reaktionsprodukt ist in dieser Alternative $[L_N\text{-}Tf][OTf]$, das dann in dem Verfahren gemäß der vorliegenden Erfindung eingesetzt wird. Sobald der Sauerstoffakzeptor, das Triflylkation, $Tf^+$ unter Bildung des Triflatanions, $OTf^-$, reagiert, wird $L_N$ freigesetzt und kann an das Phosphoratom des Phosphorsäureesters binden. Die Umsetzung des Phosphorsäureesters mit dem Sauerstoffakzeptor erfolgt insofern auch in dieser Alternative in Gegenwart einer Lewis-Base $L_N$.

Das Verfahren gemäß der vorliegenden Erfindung kann in Lösung, in der Schmelze, oder als Feststoffreaktion durchgeführt werden.

Im Verfahren gemäß der vorliegenden Erfindung erfolgt die Synthese besonders bevorzugt in einem aprotischen Lösemittel.

Weiterhin besonders bevorzugt ist, dass im Verfahren gemäß der vorliegenden Erfindung außer der Lewis-Base $L_N$ keine weiteren Lewis-Basen oder Nucleophile zugesetzt werden. Als weitere Lewis-Basen oder Nucleophile werden hier Substanzen verstanden, die von der oben definierten Lewis-Base $L_N$ verschieden sind. Diese weiteren Lewis-Basen oder Nucleophile könnten mit der oben definierten Lewis-Base $L_N$ in Konkurrenz um die Bindung zum Phosphoratom des Phosphorsäureesters treten und damit die Bildung des stickstoffhaltigen Phosphor(V)-Präkursors der Formel (I) erschweren, verhindern bzw. dessen Ausbeute reduzieren durch die Bildung von Gemischen.

Der Fachmann kennt in diesem Zusammenhang das Erfordernis, weitere Lewis-Basen oder Nucleophile von der Reaktion auszuschließen von ähnlichen Reaktionen aus dem Stand der Technik. Insbesondere wird der Fachmann zum Beispiel folgende Substanzen von der Reaktion ausschließen: Wasser, Alkohole, Ammoniak, Amine, Imine, Azole, Pyrroline, Sulfide, Halogenide und metallorganische Reagenzien.

Weiterhin bevorzugt ist das Lösemittel definiert wie die Lewis-Base $L_N$, wobei für das Lösemittel zusätzlich gilt, dass dessen Schmelzpunkt unterhalb 20 °C ist (bei Normaldruck entsprechend 101325 Pa).

Als Lösemittel besonders bevorzugt ist Pyridin.

Im Falle einer Feststoffreaktion wird bevorzugt die Reaktion unter erhöhter Temperatur durchgeführt, bevorzugt oberhalb 100 °C. Die Temperatur wird üblicherweise unterhalb 200 °C liegen.

Gemäß einer besonders bevorzugten Ausführungsform des Verfahrens gemäß der vorliegenden Erfindung ist das Sulfonsäureanhydrid gemäß Formel (III) Trifluormethansulfonsäureanhydrid und ist die Lewis-Base $L_N$ ausgewählt aus der Gruppe bestehend aus Pyridin, 4-Dimethylaminopyridin, und deren Mischungen.

Gemäß einer weiteren besonders bevorzugten Ausführungsform des Verfahrens gemäß der vorliegenden Erfindung ist das Sulfonsäureanhydrid gemäß Formel (III) Trifluormethansulfonsäureanhydrid, ist die Lewis-Base $L_N$ Pyridin oder 4-Dimethylaminopyridin, und wird die Synthese in Pyridin als Lösemittel durchgeführt.

Wenn Pyridin als am meisten bevorzugtes Lösemittel im Verfahren gemäß der vorliegenden Erfindung verwendet wird, fungiert es automatisch auch als Lewis-Base $L_N$. Wird das Verfahren allerdings mit Pyridin als Lösemittel in Gegenwart von 4-Dimethylaminopyridin als Lewis-Base $L_N$ durchgeführt, enthält der stickstoffhaltige Phosphor(V)-Präkursor der Formel (I) zwei Äquivalente 4-Dimethylaminopyridin.

Bei Verwendung von Trifluormethansulfonsäureanhydrid als Sulfonsäureanhydrid gemäß Formel (III), von Pyridin oder 4-Dimethylaminopyridin als Lewis-Base $L_N$ und von Pyridin als Lösemittel, fällt das Kation der Formel (I) mit Triflat, $OTf^-$, als Gegenion aus der Lösung aus und kann in üblicher Weise isoliert und gewaschen werden.

Die vorliegende Erfindung ermöglicht ein Verfahren zur Synthese von Oxyphosphorverbindungen, wobei das Verfahren die folgenden Schritte in der angegebenen Reihenfolge umfasst:

c) Synthese eines stickstoffhaltigen Phosphor(V)-Präkursors der Formel (I) gemäß der vorliegenden Erfindung;

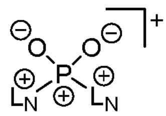

Formel (I)

d) Umsetzung des stickstoffhaltigen Phosphor(V)-Präkursors der Formel (I) mit einem Nucleophil.

Der Fachmann kennt den Begriff Nucleophil. Im Verfahren zur Synthese von Oxyphosphorverbindungen kann jedes beliebige Nucleophil eingesetzt werden.

Das Nucleophil ist bevorzugt ausgewählt ist aus der Gruppe bestehend aus Alkoholen, Ammoniak, primären Aminen, sekundären Aminen, tertiären Aminen, Azolen, metallorganischen Verbindungen und Fluorid. Fluorid kann in üblicher Weise als Metallfluorid eingesetzt werden, wie Cäsiumfluorid. Als Nucleophil kann darüber hinaus jede der weiter oben im Zusammenhang mit der vorliegenden Erfindung als Lewis-Base $L_N$ beschriebenen Verbindungen Verwendung finden.

Dem Fachmann ist bekannt, dass bei derartigen Reaktionen eines Nucleophils dieses gegebenenfalls auch in der deprotonierten Variante eingesetzt werden kann. Im Fall der Alkohole sind das die Alkoholate, die in üblicher Weise als Metallalkoholate eingesetzt werden können.

Bezüglich geeigneter oder bevorzugter Verbindungen, die als Phosphorsäureester, als Sulfonsäureanhydrid gemäß Formel (III), als Lewis-Base $L_N$, und als Lösemittel im obigen Schritt c) des Verfahrens zur Synthese von Oxyphosphorverbindungen Verwendung finden können, wird auf die entsprechenden Ausführungen im Zusammenhang mit der vorliegenden Erfindung verwiesen. Das Gleiche gilt für geeignete und bevorzugte Reaktionsbedingungen.

Der stickstoffhaltige Phosphor(V)-Präkursors der Formel (I) gemäß der vorliegenden Erfindung kann isoliert werden und dann im Schritt d) des Verfahrens zur Synthese von Oxyphosphorverbindungen eingesetzt werden.

Der Schritt d) des Verfahrens zur Synthese von Oxyphosphorverbindungen erfolgt bevorzugt in Lösung bzw. in Suspension der Reaktionspartner in einem nicht-wässrigen Lösemittel. Geeignete Nucleophile können ebenfalls als Lösemittel verwendet werden. Typische Lösemittel sind alle gängigen organischen Lösemittel (z.B. Acetonitril, Nitromethan, Tetrahydrofuran, Pyridin, Dichlormethan) und deren Mischungen. Dem Fachmann ist bekannt, welche weiteren Lösemittel grundsätzlich verwendet werden können und wird für jedes Reaktandenpaar aus stickstoffhaltigem Phosphor(V)-Präkursor der Formel (I) und Nucleophil ein geeignetes Lösemittel ermitteln können. Das Auffinden eines geeigneten Lösemittels gehört zum grundlegenden Fachwissen eines Fachmanns auf dem Gebiet der präparativen Chemie.

Ein Nucleophil, das als Lösemittel eingesetzt werden kann, ist zum Beispiel 2-Ethylhexanol.

Alternativ zur Isolierung des stickstoffhaltigen Phosphor(V)-Präkursors der Formel (I) gemäß der vorliegenden Erfindung, kann das Nucleophil gemäß Schritt d) des Verfahrens zur Synthese von Oxyphosphorverbindungen auch zu der Reaktionsmischung aus Schritt b) des Verfahrens der vorliegenden Erfindung gegeben werden.

In diesem Fall erfolgen beide Reaktionen in ein und demselben Reaktionsgefäß. Allerdings muss abgewartet werden, bis die Synthese des stickstoffhaltigen Phosphor(V)-Präkursors der Formel (I) abgeschlossen ist, d.h. bis sich das Gleichgewicht der Reaktion eingestellt hat oder nicht mehr verändert. Der Fachmann weiß, wie er diesen Zeitpunkt durch geeignete Analytik, wie NMR-Spektroskopie der Reaktionslösung, bestimmen kann.

Im Falle einer besonders bevorzugten Ausführungsform des Verfahrens gemäß der vorliegenden Erfindung wird die Reaktion in Pyridin als Lösemittel durchgeführt, ist das Sulfonsäureanhydrid gemäß der Formel (III) Trifluormethansulfonsäureanhydrid, und ist die Lewis-Base $L_N$ entweder das Lösemittel Pyridin oder es wird als Lewis-Base $L_N$ zusätzlich 4-Dimethylaminopyridin zugegeben. In dieser besonders bevorzugten Ausführungsform fällt das Produkt, das Salz aus dem Kation der Formel (I) mit Triflat, $OTf^-$, als Gegenion aus der Lösung aus. Es lässt sich daher der Reaktionsfortschritt schon an der Trübung der Lösung erkennen. In einer sogenannten Eintopfreaktion kann das Nucleophil zu dieser Suspension gegeben werden.

Je nachdem, ob das Nucleophil vor der Reaktion oder während der Reaktion noch deprotoniert wird oder nicht, kann das entstehende Produkt ein Anion oder ein Kation sein, das mit einem geeigneten Gegenion aus der Reaktionslösung isoliert und in üblicher Weise gereinigt werden kann.

Wenn das Nucleophil ein Alkohol bzw. ein Alkoholat ist, lässt sich die Reaktion gemäß dem Verfahren zur Synthese von Oxyphosphorverbindungen wie folgt veranschaulichen:

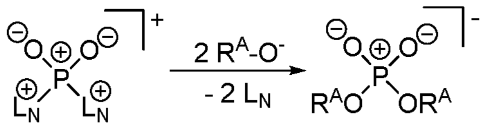


Auf diese Weise sind die entsprechenden Diester der Phosphorsäure einfach zugänglich. Im Gegensatz zur klassischen Synthese aus Phosphorpentaoxid und Alkohol entstehen selektiv die Diester und es ist daher keine Abtrennung der Monoester und Triester aus einem Produktgemisch nötig. Als Nucleophil ist grundsätzlich jeder Alkohol bzw. jedes Alkoholat geeignet.

Der Rest $R^A$ ist ein Kohlenwasserstoffrest, der Heteroatome enthalten kann. Zwei Reste $R^A$ können dabei gemeinsam eine Brücke zwischen zwei Hydroxylgruppen bilden und der Alkohol demgemäß als verbrückender Chelatligand an das Phosphoratom binden.

Bevorzugt ist die Anzahl der Kohlenstoffatome von $R^A$ zwischen 1 und 50 oder zwischen 1 und 25. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest $R^A$ keine weiteren Heteroatome außer Sauerstoff, Stickstoff und Fluor, weiterhin bevorzugt keine weiteren Heteroatome.

Geeignete Alkohole sind neben einwertigen Alkoholen auch Diole, Polyole, Zuckeralkohole und Zucker, einschließlich Nukleoside.

Als Nucleophil kann zum Beispiel 2-Ethylhexanol eingesetzt werden. Die Umsetzung mit zwei Äquivalenten 2-Ethylhexanol ergibt auf einfache Weise das industriell bedeutsame Bis(2-ethylhexyl)phosphat (siehe: Datenblatt *Bis(2-ethylhexyl) phosphate, 95%* bei AlfaAesar, abgerufen am 25. März 2020 (PDF)). Ebenso industriell bedeutsam ist die Verwendung von 2,2,2-Trifluorethanol als Nucleophil zur analogen Synthese von Bis(2,2,2-trifluoroethyl)phosphat (siehe: a) A. Maruo, S. Yamazaki, Liquid Electrolyte comprising an alkalimetal salt of a phosphate compound, WO-A1-2013/002186; b) A. Garsuch, M. Schmidt, R. Schmitz, I. Krossing, P. Eiden, S., Reininger, Inorganic coordination polymers as gelling agents, WO 2015/128363 A1). Schließlich erlaubt das Verfahren gemäß der vorliegenden Erfindung die einfache Umsetzung von 1,1'-Bi-2-naphthol (BINOL) zum BINOL-Phosphat (siehe: D. Parmar, E. Sugiono, S. Raja, M. Rueping, Chem. Rev. 2014, 114, 9047).

Wenn das Nucleophil Ammoniak ist, lässt sich die Reaktion gemäß dem Verfahren zur Synthese von Oxyphosphorverbindungen wie folgt veranschaulichen:

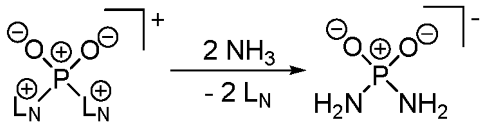


Auf diese Weise ist Diamidophosphat einfach zugänglich.

Wenn das Nucleophil ein primäres Amin ist, lässt sich die Reaktion gemäß dem Verfahren zur Synthese von Oxyphosphorverbindungen wie folgt veranschaulichen:

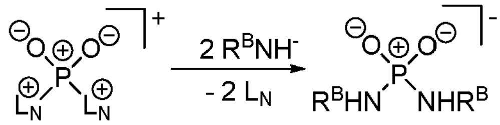


Auf diese Weise ist Diamidophosphat einfach zugänglich.

Als Nucleophil ist grundsätzlich jedes primäre Amin bzw. jedes primäre Amid geeignet.

Der Rest $R^B$ ist ein Kohlenwasserstoffrest, der Heteroatome enthalten kann. Zwei Reste $R^B$ können dabei gemeinsam eine Brücke zwischen zwei Amingruppen bilden und das Amin demgemäß als verbrückender Chelatligand an das Phosphoratom koordinieren.

Bevorzugt ist die Anzahl der Kohlenstoffatome von $R^B$ zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest $R^B$ keine weiteren Heteroatome außer Sauerstoff, Stickstoff und Fluor, weiterhin bevorzugt keine weiteren Heteroatome.

Wenn das Nucleophil ein sekundäres Amin ist, lässt sich die Reaktion gemäß dem Verfahren zur Synthese von Oxyphosphorverbindungen wie folgt veranschaulichen:

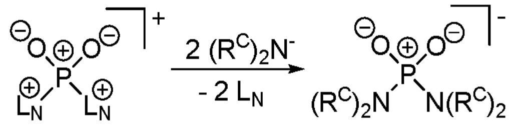


Auf diese Weise sind die entsprechenden Diamidophosphate einfach zugänglich.

Als Nucleophil ist grundsätzlich jedes sekundäre Amin bzw. jedes sekundäre Amid geeignet.

Der Rest $R^C$ ist ein Kohlenwasserstoffrest, der Heteroatome enthalten kann. Zwei Reste $R^C$ können dabei gemeinsam eine Brücke zwischen zwei Amingruppen bilden und das Amin demgemäß als verbrückender Chelatligand an das Phosphoratom koordinieren.

Bevorzugt ist die Anzahl der Kohlenstoffatome von $R^C$ zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest $R^C$ keine weiteren Heteroatome außer Sauerstoff, Stickstoff und Fluor, weiterhin bevorzugt keine weiteren Heteroatome.

Wenn das Nucleophil ein tertiäres Amin ist, lässt sich die Reaktion gemäß dem Verfahren zur Synthese von Oxyphosphorverbindungen wie folgt veranschaulichen:

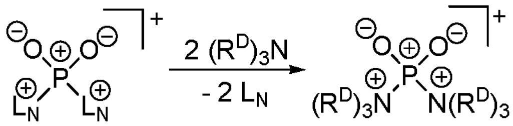


Auf diese Weise sind die entsprechenden Diamoniophosphate einfach zugänglich.

Als Nucleophil ist grundsätzlich jedes tertiäre Amin geeignet.

Der Rest $R^D$ ist ein Kohlenwasserstoffrest, der Heteroatome enthalten kann. Zwei Reste $R^D$ können dabei gemeinsam eine Brücke zwischen zwei Amingruppen bilden und das Amin demgemäß als verbrückender Chelatligand an das Phosphoratom koordinieren.

Bevorzugt ist die Anzahl der Kohlenstoffatome von $R^D$ zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest $R^D$ keine weiteren Heteroatome außer Sauerstoff, Stickstoff und Fluor, weiterhin bevorzugt keine weiteren Heteroatome.

Wenn das Nucleophil ein Azol ist, lässt sich die Reaktion gemäß dem Verfahren zur Synthese von Oxyphosphorverbindungen wie folgt veranschaulichen:

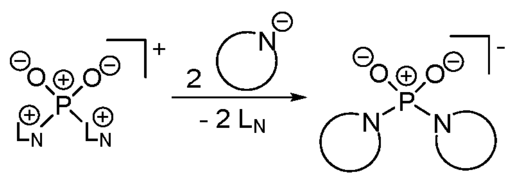

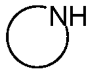
= Azol

Auf diese Weise sind die entsprechenden Diamidophosphate einfach zugänglich.
Das Nuckleophil Azol ist bevorzugt ausgewählt aus der Gruppe bestehend aus Pyrrolen, Imidazolen, Pyrazolen, Triazolen und Tetrazolen.
Im Einzelnen sind hier zu nennen:

Pyrrole wie Pyrrol, einfach alkyl-substituierte Pyrrole, zweifach alkyl-substituierte Pyrrole, dreifach alkyl-substituierte Pyrrole, vierfach alkyl-substituierte Pyrrole;
Imidazole wie 1,3-Imidazol, einfach alkyl-substituierte Imidazole, zweifach alkyl-substituierte Imidazole, dreifach alkyl-substituierte Imidazole;
Pyrazole wie 1,2-Pyrazol, einfach alkyl-substituierte Pyrazole, zweifach alkyl-substituierte Pyrazole, dreifach alkyl-substituierte Pyrazole;
Triazole wie 1,2,3-Triazol, 1,2,4-Triazol, einfach alkyl-substituierte Triazole, zweifach alkyl-substituierte Triazole;
Tetrazole wie Tetrazol, einfach alkyl-substituierte Tetrazole,

Die Anzahl der Kohlenstoffatome der Azole ist bevorzugt von 4 bis 24.
Die Azole enthalten weiterhin bevorzugt ein bis vier Stickstoffatome und keine weiteren Heteroatome.
Wenn das Nucleophil eine metallorganische Verbindung ist, lässt sich die Reaktion gemäß dem Verfahren zur Synthese von Oxyphosphorverbindungen wie folgt veranschaulichen:

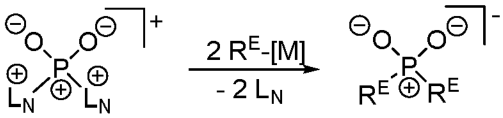


[M] = MgX, Li, Zn, Cu
X = Cl, Br

Auf diese Weise sind die entsprechenden Phosphinate einfach zugänglich.
Als Nucleophil ist grundsätzlich jede metallorganische Verbindung geeignet, in der das Kohlenstoffatom nucleophil reagiert. Hierzu zählen metallorganische Verbindung mit den Metallen, beispielsweise Lithium, Magnesium, Aluminium, Zink und Kupfer.
Der Rest $R^E$ ist ein Kohlenwasserstoffrest, der Heteroatome enthalten kann. Zwei Reste $R^E$ können dabei gemeinsam eine Brücke zwischen zwei Kohlenstoffatomen bilden und demgemäß als verbrückender Chelatligand an das Phosphoratom koordinieren.
Bevorzugt ist die Anzahl der Kohlenstoffatome von $R^E$ zwischen 1 und 25 oder zwischen 1 und 10. Weiterhin bevorzugt sind die Heteroatome ausgewählt aus der Gruppe bestehend aus Stickstoff, Sauerstoff, Schwefel, Fluor, Chlor, und Brom. Besonders bevorzugt enthält der Rest $R^E$ keine weiteren Heteroatome, weiterhin bevorzugt keine weiteren Heteroatome.

**Experimenteller Teil**

Alle Reaktionen wurden in getrockneter Inertgasatmosphäre ($N_2$ oder Ar) unter Nutzung einer Glovebox (*Innovative Technology Pure Lab HE, MBraun Unilab*) oder mittels Schlenk-Technik durchgeführt. Glasgeräte wurden vor der Benutzung bei 150 °C gelagert oder unter Vakuum mit einem Heißluftgebläse ausgeheizt. Genutzte Lösungsmittel wurden zuvor mit geeigneten Trocknungsmitteln destilliert und über Molsieb gelagert. Die deuterierten Lösungsmittel wurden von Merck, Deutero oder Eurisotop bezogen und vor der Nutzung über Molsieb gelagert.

**$^1$H-NMR, $^{13}$C-NMR, $^{31}$P-NMR, $^{19}$F-NMR**

Kernspinresonanzexperimente wurden an den Geräten *AVANCE III HD Nanobay 400 MHz Ultrashield* (Resonanzfrequenzen: $^1$H = 400.13 MHz, $^{19}$F = 376.50 Hz, $^{31}$P = 161.98 MHz) oder *AVANCE III HDX 500 MHz Ascend* (Resonanzfrequenzen: $^1$H = 500.13 MHz, $^{19}$F = 470.59 MHz, $^{31}$P = 202.45 MHz) der Firma Bruker durchgeführt und mit der Software *Topspin* ausgewertet. Die Werte der chemischen Verschiebung $\delta$ beziehen sich auf die externen Standards Tetramethylsilan ($^1$H), Trichlorfluormethan ($^{19}$F) oder Phosphorsäure 85% ($^{31}$P) und werden in ppm auf 1-2 Nachkommastellen gerundet angegeben. Skalare Kopplungen über *n* Bindungen $^nJ$ werden in Hz auf 1-2 Nachkommastellen gerundet angegeben. Zur Beschreibung der Multiplizität werden folgende Abkürzungen verwendet: s - Singulett, s(br) - breites

Singulett, d - Dublett, t - Triplett, q - Quartett, m - Multiplett. Kombinationen dieser Abkürzungen werden stets in der Reihenfolge absteigender Kopplungskonstanten angegeben.

**Chemikalien**

Chemikalien und Lösungsmittel wurden von Merck, VWR, Alfa Aesar, Acros Organics oder TCI bezogen. Trifluormethansulfonsäureanhydrid ($Tf_2O$) wurde von der Fa. Solvay gespendet.

**Abkürzungen**

| | |
|---|---|
| Äq. | Äquivalente |
| BINOL | 1,1'-Bi-2-naphthol |
| D2EHPA | Bis(2-ethylhexyl)phosphat |
| KOtBu | Kalium-tert-butanolat |
| MeOH | Methanol |
| $OTf^-$ | Trifluormethansulfonat |
| $OP(OMe)_3$ | Trimethylphosphat |
| PhMgBr | Phenylmagnesiumbromid |
| Py | Pyridin |
| $Tf^+$ | Triflatkation |
| $Tf_2O$ | Trifluormethansulfonsäureanhydrid |
| THF | Tetrahydrofuran |
| $Ts_2O$ | *p*-Toluolsulfonäureanhydrid |

**Beispiele**

**Beispiel 1: Synthese von $(L_N)_2PO_2$[OTf] ($L_N$ = Pyridiniumyl) aus Triethylphosphat**

Zu einer Lösung von Triethylphosphat (500 mg, 2.7 mmol, 1 Äq.) in Pyridin (8 ml) wurde unter kräftigem Rühren und Kühlung im Eisbad Trifluormethansulfonsäureanhydrid ($Tf_2O$; 1.70 g, 6.0 mmol, 2.2 Äq.) tropfenweise zugegeben, was zur Braunfärbung der Lösung führt. Das Gemisch wurde für weitere 16 h bei 40 °C gerührt, während dessen ein farbloser Niederschlag aus der Lösung ausfällt. Der Niederschlag wurde abfiltriert, mit Pyridin gewaschen, im Vakuum getrocknet und mittels multinuklearer NMR-Spektroskopie als $Py_2PO_2$[OTf] (Py = Pyridiniumyl) identifiziert (siehe Abbildung 1 und 2).

Ausbeute: 840 mg (82 %); $^1$H NMR ($CD_3CN$, 300 K, $\delta$ in ppm): 8.10 (m, 4H, Py-*m*-H), 8.62 (m, 2H, Py-p-H), 9.28 (m, 4H, Py-o-H); $^{19}$F NMR ($CD_3CN$, 300 K, $\delta$ in ppm): -79.3 (s, 3F, $OTf^-$); $^{31}$P NMR ($CD_3CN$, , 300 K, $\delta$ in ppm): -15.9 (s, 1P).

Das Produkt des Beispiels 1 (Abbildung 1) zeigt in den $^{31}$P- und $^{19}$F-NMR-Spektren jeweils ein Singulett. Die Resonanz im $^{31}$P-NMR-Spektrum verweist mit seiner chemischen Verschiebung von $\delta$(P) = -15.9 ppm auf den aus der Literatur bekannten Phosphor(V)-Präkursor (P. Rovnanik, L. Kapiĉka, J. Taraba, M. Ĉerník, *Inorg. Chem.* **2004,** *43*, 2435). Die Resonanz im $^{19}$F-NMR-Spektrum verweist mit seiner chemischen Verschiebung von $\delta$(F) = -79.3 ppm auf das aus der Literatur bekannte Triflatanion. Die chemischen Verschiebungen im $^1$H-NMR-Spektrum bei $\delta$(H) = 8.10 ppm, $\delta$(H) = 8.62 ppm und $\delta$(H) = 9.28 ppm, verweisen auf die Anwesenheit des Pyridin Liganden.

**Beispiel 2: Synthese von $(L_N)_2PO_2$[OTf] ($L_N$ = Pyridiniumyl) aus Tributylphosphat**

Zu einer Lösung von Tributylphosphat (1.0 g, 3.75 mmol, 1 Äq.) in Pyridin (8 ml) wurde unter kräftigem Rühren und Kühlung im Eisbad Trifluormethansulfonsäureanhydrid ($Tf_2O$; 2.33 g, 8.3 mmol, 2.2 Äq.) tropfenweise zugegeben, was zur Braunfärbung der Lösung führt. Das Gemisch wurde für weitere 16 h bei 40 °C gerührt, während dessen ein farbloser Niederschlag aus der Lösung ausfällt. Der Niederschlag wurde abfiltriert, mit Pyridin gewaschen, im Vakuum getrocknet und mittels multinuklearer NMR-Spektroskopie als $Py_2PO_2$[OTf] (Py = Pyridiniumyl) identifiziert. Die spektroskopischen Daten sind denen aus Beispiel 1 identisch.

Ausbeute: 1.16 g (83 %); $^1$H NMR ($CD_3CN$, 300 K, $\delta$ in ppm): 8.10 (m, 4H, Py-m-H), 8.62 (m, 2H, Py-p-H), 9.28 (m, 4H, Py-o-H); $^{19}$F NMR ($CD_3CN$, 300 K, $\delta$ in ppm): -79.3 (s, 3F, $OTf^-$); $^{31}$P NMR ($CD_3CN$, , 300 K, $\delta$ in ppm): -15.9 (s, 1P).

**Beispiel 3: Synthese von $(L_N)_2PO_2[OTf]$ ($L_N$ = Pyridiniumyl) aus Bis(2-ethylhexyl)phosphat (D2EHPA)**

Zu einer Lösung von Bis(2-ethylhexyl)phosphat (1.29 g, 4.0 mmol, 1 Äq.) in Pyridin (8 ml) wurde unter kräftigem Rühren und Kühlung im Eisbad Trifluormethansulfonsäureanhydrid ($Tf_2O$; 2.48 g, 8.8 mmol, 2.2 Äq.) tropfenweise zugegeben, was zur Braunfärbung der Lösung führt. Das Gemisch wurde für weitere 16 h bei 45 °C gerührt, während dessen ein farbloser Niederschlag aus der Lösung ausfällt. Der Niederschlag wurde abfiltriert, mit Pyridin gewaschen, im Vakuum getrocknet und mittels multinuklearer NMR-Spektroskopie als $Py_2PO_2[OTf]$ (Py = Pyridiniumyl) identifiziert. Die spektroskopischen Daten sind denen aus Beispiel 1 identisch.

Ausbeute: 1.48 g (> 99 %); $^1H$ NMR ($CD_3CN$, 300 K, $\delta$ in ppm): 8.10 (m, 4H, Py-*m*-H), 8.62 (m, 2H, Py-p-H), 9.28 (m, 4H, Py-o-H); $^{19}F$ NMR ($CD_3CN$, 300 K, $\delta$ in ppm): -79.3 (s, 3F, $OTf^-$); $^{31}P$ NMR ($CD_3CN$, , 300 K, $\delta$ in ppm): -15.9 (s, 1P).

**Beispiel 4: Umsetzung von Trimethylphosphat mit p-Toluolsulfonäureanhydrid in Pyridin**

Trimethylphosphat (50 mg, 0.36 mmol) wird in 2 ml Pyridin gelöst und es wird *p*-Toluolsulfonsäureanhydrid (256 mg, 0.78 mmol) langsam zugegeben. Die Reaktionsmischung wird 12 h bei Raumtemperatur gerührt. Es wird eine Probe entnommen und mittels multinuklearer NMR Spektroskopie untersucht. Die Bildung von $[(Py)_2PO_2]^+$ wird im $^{31}P$ NMR Spektrum nachgewiesen ($^{31}P$ NMR (Pyridin, $C_6D_6$-Kapillare, 300 K, $\delta$ in ppm): -15.3 (1P, s) (siehe Abbildung 3).

**Beispiel 5: Reaktionen von $(L_N)_2PO_2[OTf]$ mit Alkoholen und Alkoholaten**

**Beispiel 5a): Reaktion von $(DMAP)_2PO_2[OTf]$ mit MeOH**

$(DMAP)_2PO_2[OTf]$ (30 mg, 0.065 mmol) wird in einer Mischung aus $CH_3CN$ und $MeNO_2$ (ca. 1 ml) gelöst und 2 Tropfen trockenes MeOH dazu gegeben. Die Reaktionsmischung wurde über Nacht gerührt und NMR spektroskopisch untersucht. Das $^{31}P$ NMR Spektrum zeigt die selektive Bildung von Dimethylphosphat $[(MeO)_2PO_2^-]$ ($^{31}P$ NMR ($CH_3CN$, $MeNO_2$, $C_6D_6$-Kapillare, 300 K, $\delta$ in ppm): -4.6 (1P, s).

**Beispiel 5b): Reaktion von $(DMAP)_2PO_2[OTf]$ mit PhOH**

$(DMAP)_2PO_2[OTf]$ (40 mg, 0.08 mmol) und Phenol (17 mg, 0.17 mmol) werden in $CH_3CN$ (ca. 1.5 ml) suspendiert und für 2 Tage bei 40°C gerührt. Das $^{31}P$ NMR Spektrum der Reaktionslösung zeigt die selektive Bildung von Diphenylphosphat $[(PhO)_2PO_2^-]$ ($^{31}P$ NMR ($CH_3CN$, $MeNO_2$, $C_6D_6$-Kapillare, 300 K, $\delta$ in ppm): -11.5 (1P, s).

**Beispiel 5c): Reaktion von $(Py)_2PO_2[OTf]$ mit 2-Ethylhexanol**

$(Py)_2PO_2[OTf]$ (500 mg, 1.35 mmol) wird in 2-Ethylhexanol (5 ml) suspendiert und für 3 Tage bei 65°C gerührt. Das $^{31}P$ NMR Spektrum der Reaktionslösung zeigt die selektive Bildung von Bis(2-ethylhexyl)phosphat $[(RO)_2PO_2^-]$ (R = 2-ethylhexanoyl) ($^{31}P$ NMR (neat, $C_6D_6$-Kapillare, 300 K, $\delta$ in ppm): 2.12 (1P, s)). Das 2-Ethylhexanol wird im Vakuum abgezogen und der Rückstand in n-Hexan (6 ml) und entgastem Wasser (1 ml) aufgenommen. Nach Trennen der organischen Phase und anschließender Trocknung im Vakuum, wird Bis(2-ethylhexyl)phosphat in 97%iger Reinheit in 81% (347 mg) Ausbeute erhalten.

**Beispiel 5d): Reaktion von $(DMAP)_2PO_2[OTf]$ mit KOtBu**

Zu einer kalten (-30°C) Suspension aus $(DMAP)_2PO_2[OTf]$ (50 mg, 0.11 mmol) in THF (1 ml) wurde langsam eine Lösung aus Kalium-tert-butanolat (25 mg, 0.22 mmol) in THF (1 ml) zugegeben, wobei sich die Suspension leicht gelb färbt. Nach 3 h zeigt das $^{31}P$ NMR Spektrum der Reaktionslösung einen vollständigen Umsatz zu dem entsprechenden Di-tert-butylphosphat $[(tBuO)_2PO_2^-]$ ($^{31}P$ NMR (THF, $C_6D_6$-Kapillare, 300 K, $\delta$ in ppm): -5.9 (1P, s).

**Beispiel 5e): Reaktion von $(Py)_2PO_2[OTf]$ mit BINOL**

$(Py)_2PO_2[OTf]$ (200 mg, 0.54 mmol) und BINOL (155 mg, 0.54 mmol) werden zusammen eingewogen und in Pyridin (5 ml) suspendiert. Die Reaktionsmischung wird anschließend bei Raumtemperatur für 12 h gerührt. Nach 12 h zeigt das $^{31}P$ NMR Spektrum der Reaktionslösung einen vollständigen und sauberen Umsatz zu dem entsprechenden BINOL-Phosphat ($^{31}P$ NMR (Pyridin, $C_6D_6$-Kapillare, 300 K, $\delta$ in ppm): 6.5 ppm (1P, s). Die wässrige Aufarbeitung liefert das saubere Produkt in 88% Ausbeute.

**Beispiel 5f): Reaktion von $(Py)_2PO_2[OTf]$ mit $HOCH_2CF_3$**

$(Py)_2PO_2[OTf]$ (185 mg, 0.5 mmol) und 2,2,2-trifluoroethanol (110 mg, 1.1 mmol) werden zusammen eingewogen und in Pyridin (2.5 ml) suspendiert. Die Reaktionsmischung wird bei Raumtemperatur für 12 h gerührt. Nach 12 h zeigt das $^{31}P$ NMR Spektrum der Reaktionslösung einen vollständigen und sauberen Umsatz zu dem entsprechenden Bis-(trifluoroethyl)phosphat $[(CF_3CH_2O)_2PO_2^-]$ ($^{31}P$ NMR (THF, $C_6D_6$-Kapillare, 300 K, $\delta$ in ppm): -2.8 (1P, s). Die wässrige Aufarbeitung liefert das saubere Produkt.

**Beispiel 6: Reaktion von $(DMAP)_2PO_2[OTf]$ mit PhMgBr**

Zu einer kalten (-80°C) Suspension aus $(DMAP)_2PO_2[OTf]$ (60 mg, 0.13 mmol) in $CH_2Cl_2$ (3 ml) werden 0,27 ml einer 1 M THF Lösung von Phenylmagnesiumbromid (0.27 mmol) gegeben. Die Reaktionsmischung wird über Nacht gerührt, wobei eine braune, klare Lösung entsteht. Die NMR Untersuchung der Reaktionslösung zeigt die Bildung von Diphenylphosphinat $[(Ph)_2PO_2^-]$ ($^{31}P$ NMR ($CD_3CN$, 300 K, $\delta$ in ppm): 14.8 (1P, s).

**Beispiel 7: Reaktionen von $(L_N)_2PO_2[OTf]$ mit Aminen**

**Beispiel 7a): Reaktion von $(Py)_2PO_2[OTf]$ mit Natriumtriazolid**

Zu einer Suspension aus Natriumtriazolid (74 mg, 0.81 mmol) in $CH_3CN$ (2 ml) wird festes $(Py)_2PO_2[OTf]$ (150 mg, 0.40 mmol) gegeben und die Reaktionsmischung wird für weitere 2 h gerührt. Die farblose Suspension wird filtriert und der Feststoff mit $CH_3CN$ gewaschen und anschließend im Vakuum getrocknet. Der Feststoff wird mittels multinuklearer NMR Spektroskopie untersucht wodurch die Bildung des entsprechenden $(Triazol)_2PO_2^-$ bestätigt wird. Das $^{31}P$ NMR Spektrum zeigt dabei zwei unterschiedliche Isomere ($^{31}P$ NMR (DMSO-$d_6$, 300 K, $\delta$ in ppm): -22.3 (1P, s; 85%), -24.4 (1P, s; 15%).

**Beispiel 7b): Reaktion von $(Py)_2PO_2[OTf]$ mit Natriumimidazolid**

Zu einer Suspension aus Natriumimidazolid (54 mg, 0.54 mmol) in $CH_3CN$ (2 ml) wird festes $(Py)_2PO_2[OTf]$ (100 mg, 0.27 mmol) gegeben und die Reaktionsmischung wird für weitere 2 h gerührt. Die farblose Suspension wird filtriert und der Feststoff mit $CH_3CN$ gewaschen und anschließend im Vakuum getrocknet. Der Feststoff wird mittels multinuklearer NMR Spektroskopie untersucht wodurch die Bildung des entsprechenden $(Imidazol)_2PO_2^-$ bestätigt wird. Das $^{31}P$ NMR Spektrum zeigt dabei zwei unterschiedliche Isomere ($^{31}P$ NMR (DMSO-$d_6$, 300 K, $\delta$ in ppm): -20.8 (1P, s; 11%), -21.4 (1P, s; 89%).

**Beispiel 7c): Reaktion von $(Py)_2PO_2[OTf]$ mit Natriumpyrazolid**

Zu einer Suspension aus Natriumpyrazolid (49 mg, 0.54 mmol) in $CH_3CN$ (2 ml) wird festes $(Py)_2PO_2[OTf]$ (100 mg, 0.27 mmol) gegeben und die Reaktionsmischung wird für weitere 12 h gerührt. Die farblose Suspension wird filtriert und der Feststoff mit $CH_3CN$ gewaschen und anschließend im Vakuum getrocknet. Der Feststoff wird mittels multinuklearer NMR Spektroskopie untersucht wodurch die Bildung des entsprechenden $(Pyrazol)_2PO_2^-$ bestätigt wird. ($^{31}P$ NMR (DMSO-$d_6$, 300 K, $\delta$ in ppm): -18.2 (1P, s).

**Beispiel 7d): Reaktion von $(Py)_2PO_2[OTf]$ mit $NH_3$**

$(Py)_2PO_2[OTf]$ (100 mg, 0.27 mmol) wird in $CH_3CN$ (2 ml) gelöst und $NH_3$ 0.54 ml (0.5 M in Dioxan) hinzugegeben. Die Reaktionsmischung wird für weitere 12 h gerührt. Die farblose Suspension wird filtriert und der Feststoff mit $CH_3CN$ gewaschen und anschließend im Vakuum getrocknet. Der Feststoff wird mittels multinuklearer NMR Spektroskopie untersucht und zeigt die Bildung unter anderem die Bildung von $(NH_2)_2PO_2^-$. ($^{31}P$ NMR (DMSO-$d_6$, 300 K, $\delta$ in ppm): -0.3 (1P, *pent.* $^2J_{PH}$ = 8 Hz).

**Beispiel 7e): Reaktion von $(Py)_2PO_2[OTf]$ mit Chinuclidin**

$(Py)_2PO_2[OTf]$ (50 mg, 0.13 mmol) wird in THF (2 ml) suspendiert und festes Chinuclidin (40 mg, 0.35 mmol) hinzugegeben. Die Reaktionsmischung wird für weitere 12 h gerührt. Die farblose Suspension wird filtriert und der Feststoff anschließend im Vakuum getrocknet. Der Feststoff wird mittels multinuklearer NMR Spektroskopie untersucht und zeigt die Bildung des gesmischt-substituierten Derivats $(Quin)(Py)PO_2^+$. ($^{31}P$ NMR ($CD_3CN$, 300 K, $\delta$ in ppm): -3.3 (1P, s).

**Verzeichnis der Abbildungen**

Abbildung 1: $^1$H NMR Spektrum des aus Triethylphosphat recycelten $Py_2PO_2$[OTf] ($CD_3CN$, 300 K).
Abbildung 2: $^{31}$P NMR Spektrum des aus Triethylphosphat recycelten $Py_2PO_2$[OTf] ($CD_3CN$, 300 K).
Abbildung 3: $^{31}$P NMR Spektrum der Reaktion $OP(OMe)_3$ mit 2.2 $Ts_2O$ (p-Toluolsulfonäureanhydrid) in Pyridin (300 K, $C_6D_6$-Kapillare).

**Patentansprüche**

**1.** Verfahren zur Synthese stickstoffhaltiger Phosphor(V)-Präkursoren der Formel (I),

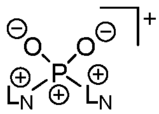
Formel (I),

wobei das Verfahren die folgenden Schritte in der angegebenen Reihenfolge umfasst:

a) Bereitstellung eines Phosphorsäureesters;
b) Umsetzung des Phosphorsäureesters aus Schritt a) mit einem Sauerstoffakzeptor in Gegenwart einer Lewis-Base $L_N$, die zur Koordination über ein Stickstoffatom fähig ist,

wobei der Sauerstoffakzeptor das Kation eines Sulfonsäureanhydrids gemäß der Formel (II) ist und das Sulfonsäureanhydrid gemäß der Formel (III) ist,

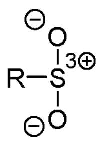
Formel (II),

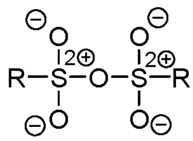
Formel (III),

wobei gemäß Schritt b) alternativ entweder

b1) der Phosphorsäureester aus Schritt a) mit einem Sulfonsäureanhydrid gemäß der Formel (III) in Gegenwart einer Lewis-Base $L_N$ zur Reaktion gebracht wird,
oder
b2) der Phosphorsäureester aus Schritt a) mit dem Reaktionsprodukt eines Sulfonsäureanhydrids gemäß der Formel (III) mit einer Lewis-Base $L_N$ zur Reaktion gebracht wird, wobei das genannte Reaktionsprodukt gemäß der Formel (IV) ist

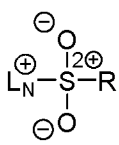
Formel (IV),

wobei R ein aliphatischer oder aromatischer Kohlenwasserstoffrest ist, der Heteroatome enthalten kann, wobei die Anzahl der Kohlenstoffatome des Rests R von 1 bis 21 ist, und die Heteroatome ausgewählt sind aus der Gruppe bestehend aus Sauerstoff, Stickstoff, Fluor, Chlor, Brom, Iod, und deren Mischungen,
wobei die Lewis-Base $L_N$, die zur Koordination über ein Stickstoffatom fähig ist, eine stickstoffhaltige heteroaromatische Verbindung ist, die einen sechsgliedrigen heteroaromatischen Ring enthält, der ein zur Koordination fähiges Stickstoffatom enthält, wobei die Anzahl der Kohlenstoffatome der Lewis-Base $L_N$ von 4 bis 19 ist, und wobei der Phosphorsäureester aus Schritt a) gemäß einer der Formeln (Va), (Vb) und (Vc) ist

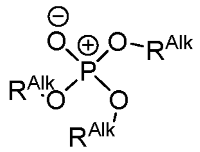
Formel (Va)

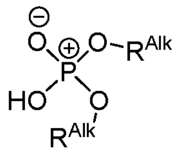
Formel (Vb)

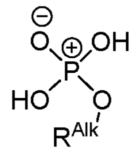
Formel (Vc),

wobei $R^{Alk}$ ein Kohlenwasserstoffrest ist, der Heteroatome enthalten kann.

2. Das Verfahren gemäß Anspruch 1, wobei die Umsetzung des Phosphorsäureesters mit einem Sauerstoffakzeptor in Schritt b) in Gegenwart von mindestens fünf Äquivalenten einer Lewis-Base $L_N$ erfolgt.

3. Das Verfahren gemäß Anspruch 1 oder 2, wobei die Anzahl der Kohlenstoffatome von jedem $R^{Alk}$ von 1 bis 50 ist und wobei die Anzahl der Kohlenstoffatome aller $R^{Alk}$ gemeinsam in einer der Formeln (Va), (Vb) oder (Vc) von 1 bis 50 ist, und wobei die Heteroatome von $R^{Alk}$ ausgewählt sind aus der Gruppe bestehend aus Stickstoff, Sauerstoff, Schwefel, Fluor, Chlor, und Brom.

4. Das Verfahren gemäß einem der Ansprüche 1 bis 3, wobei ein Kohlenstoffatom aller Kohlenwasserstoffreste $R^{Alk}$ in einer der Formeln (Va), (Vb) oder (Vc), das direkt an das Sauerstoffatom der Esterbindung des Phosphorsäureesters gebunden ist, an drei weitere Atome gebunden ist.

5. Das Verfahren gemäß einem der Ansprüche 1 bis 4, wobei R ein aliphatischer Kohlenwasserstoffrest mit 1 bis 6 Kohlenstoffatomen ist, der 0 bis 3 Heteroatome enthält, die ausgewählt sind aus der Gruppe bestehend aus Sauerstoff, Stickstoff und Fluor.

6. Das Verfahren gemäß einem der Ansprüche 1 bis 4, wobei R ein aromatischer Kohlenwasserstoffrest ist, der durch die folgende Formel (IIIa) definiert ist,

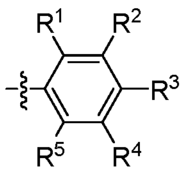
(IIIa),

wobei die Reste $R^1$, $R^2$, $R^3$, $R^4$, und $R^5$ aus den folgenden Kombinationen ausgewählt sind:

$R^1$, $R^2$, $R^3$, $R^4$, $R^5$ = H,
$R^1$, $R^2$, $R^3$, $R^4$, $R^5$ = $CH_3$,
$R^1$, $R^2$, $R^3$, $R^4$ = H und $R^5$ = $CH_3$,
$R^1$, $R^2$, $R^3$, $R^4$ = H und $R^5$ = F,
$R^1$, $R^2$, $R^3$, $R^4$ = H und $R^5$ = Cl,
$R^1$, $R^2$, $R^3$, $R^4$ = H und $R^5$ = $OCH_3$,
$R^1$, $R^2$, $R^3$, $R^4$ = H und $R^5$ = $NO_2$,
$R^1$, $R^2$, $R^3$, $R^4$ = H und $R^5$ = $CF_3$,
$R^1$, $R^2$, $R^4$ = H und $R^3$, $R^5$ = $CH_3$,
$R^2$, $R^4$ = H und $R^1$, $R^3$, $R^5$ = $CH_3$,
$R^2$, $R^3$, $R^5$ = H und $R^1$, $R^4$ = $CH_3$, oder
$R^1$, $R^2$, $R^4$, $R^5$ = H und $R^3$ = $CH_3$.

**7.** Das Verfahren gemäß der Ansprüche 5 und 6, wobei R Trifluormethyl ist oder R gemäß Formel (IIIa) definiert ist und es gilt:
$R^1$, $R^2$, $R^4$, $R^5$ = H und $R^3$ = $CH_3$.

**8.** Das Verfahren gemäß einem der Ansprüche 1 bis 7, wobei die Lewis-Base $L_N$ einen oder zwei sechsgliedrige heteroaromatische Ringe enthält, die Lewis-Base $L_N$ pro sechsgliedrigem heteroaromatischen Ring im sechsgliedrigen heteroaromatischen Ring ein oder zwei zur Koordination fähige Stickstoffatome enthält, wobei die Lewis-Base $L_N$ insgesamt ein oder zwei Stickstoffatome enthält.

**9.** Das Verfahren gemäß einem der Ansprüche 1 bis 8, wobei die Lewis-Base $L_N$ unabhängig voneinander ein oder zwei Stickstoffatome enthält, null, ein oder zwei Sauerstoffatome enthält, null, ein, zwei, drei oder vier Heteroatome enthält, die ausgewählt sind aus der Gruppe bestehend aus Fluor, Chlor, Brom, und lod, und darüber hinaus keine weiteren Heteroatome enthält.

**10.** Das Verfahren gemäß einem der Ansprüche 1 bis 9, wobei die Lewis-Base $L_N$ ausgewählt ist aus der Gruppe bestehend aus Pyridinen, Picolinen, Lutidinen, Collidinen, Bipyridinen, Pyridazinen, Pyrimidinen, Pyrazinen, Chinolinen und Isochinolinen.

**11.** Das Verfahren gemäß einem der Ansprüche 1 bis 10, wobei die Lewis-Base $L_N$ ausgewählt ist aus der Gruppe bestehend aus Pyridin, 4-Dimethylaminopyridin, und deren Mischungen.

**12.** Das Verfahren gemäß einem der Ansprüche 1 bis 11, wobei die Synthese in einem aprotischen Lösemittel erfolgt.

**13.** Das Verfahren gemäß Anspruch 12, wobei das Lösemittel Pyridin ist.

## Claims

**1.** A process for the synthesis of nitrogen-containing phosphorus(V) precursors of formula (I),

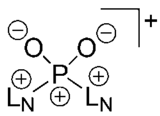
Formula (I),

wherein the method comprises the following steps in the order indicated:

a) providing a phosphoric acid ester;
b) reacting the phosphoric acid ester from step a) with an oxygen acceptor in the presence of a Lewis base $L_N$ capable of coordination via a nitrogen atom,

wherein the oxygen acceptor is the cation of a sulfonic acid anhydride according to formula (II) and the sulfonic acid anhydride is according to formula (III),

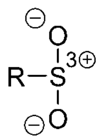
Formula (II),

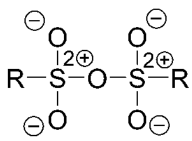
Formula (III),

wherein, according to step b), alternatively either

b1) the phosphoric acid ester from step a) is reacted with a sulfonic acid anhydride according to formula (III) in the presence of a Lewis base $L_N$,

or

b2) the phosphoric acid ester from step a) is reacted with the reaction product of a sulfonic acid anhydride according to formula (III) with a Lewis base $L_N$, wherein said reaction product is according to formula (IV)

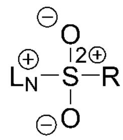 Formula (IV),

wherein R is an aliphatic or aromatic hydrocarbon radical which may contain heteroatoms, the number of carbon atoms of the radical R being from 1 to 21, and the heteroatoms being selected from the group consisting of oxygen, nitrogen, fluorine, chlorine, bromine, iodine, and mixtures thereof, wherein the Lewis base $L_N$ capable of coordination via a nitrogen atom is a nitrogen containing heteroaromatic compound containing a six-membered heteroaromatic ring containing a nitrogen atom capable of coordination, wherein the number of carbon atoms of the Lewis base $L_N$ is from 4 to 19, and wherein the phosphoric acid ester from step a) is according to one of the formulae (Va), (Vb), and (Vc)

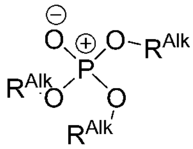
Formula (Va)

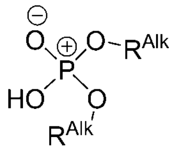
Formula (Vb)

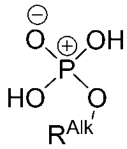
Formula (Vc),

wherein $R^{Alk}$ is a hydrocarbon radical which may contain heteroatoms.

2. The process according to claim 1, wherein the reaction of the phosphoric acid ester with an oxygen acceptor in step b) is carried out in the presence of at least five equivalents of a Lewis base $L_N$.

3. The process according to claim 1 or 2, wherein the number of carbon atoms of each $R^{Alk}$ is from 1 to 50 and wherein the number of carbon atoms of all $R^{Alk}$ together in one of the formulae (Va), (Vb), or (Vc) is from 1 to 50, and wherein the heteroatoms of $R^{Alk}$ are selected from the group consisting of nitrogen, oxygen, sulphur, fluorine, chlorine, and bromine.

4. The process according to any one of claims 1 to 3, wherein a carbon atom of any hydrocarbon residue $R^{Alk}$ in any one of the formulae (Va), (Vb), or (Vc) that is directly bonded to the oxygen atom of the ester bond of the phosphoric acid ester is bonded to three further atoms.

5. The process according to any one of claims 1 to 4, wherein R is an aliphatic hydrocarbon residue having 1 to 6 carbon atoms, which contains 0 to 3 heteroatoms selected from the group consisting of oxygen, nitrogen and fluorine.

6. The process according to any one of claims 1 to 4, wherein R is an aromatic hydrocarbon residue defined by the following formula (IIIa)

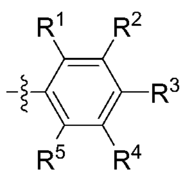 (IIIa),

wherein the radicals $R^1$, $R^2$, $R^3$, $R^4$, and $R^5$ are selected from the following combinations:

$R^1$, $R^2$, $R^3$, $R^4$, $R^5$ = H,

$R^1, R^2, R^3, R^4, R^5 = CH_3$,
$R^1, R^2, R^3, R^4 = H$ and $R^5 = CH_3$,
$R^1, R^2, R^3, R^4 = H$ and $R^5 = F$,
$R^1, R^2, R^3, R^4 = H$ and $R^5 = Cl$,
$R^1, R^2, R^3, R^4 = H$ and $R^5 = OCH_3$,
$R^1, R^2, R^3, R^4 = H$ and $R^5 = NO_2$,
$R^1, R^2, R^3, R^4 = H$ and $R^5 = CF_3$,
$R^1, R^2, R^4 = H$ and $R^3, R^5 = CH_3$,
$R^2, R^4 = H$ and $R^1, R^3, R^5 = CH_3$,
$R^2, R^3, R^5 = H$ and $R^1, R^4 = CH_3$, or
$R^1, R^2, R^4, R^5 = H$ and $R^3 = CH_3$.

**7.** The process according to claims 5 and 6, wherein R is trifluoromethyl or R is defined as in formula (IIIa), and the following applies:
$R^1, R^2, R^4, R^5 = H$ and $R^3 = CH_3$.

**8.** The process according to any one of claims 1 to 7, wherein the Lewis base $L_N$ contains one or two six-membered heteroaromatic rings, the Lewis base $L_N$ contains one or two coordination-capable nitrogen atoms per six-membered heteroaromatic ring in the six-membered heteroaromatic ring, wherein the Lewis base $L_N$ contains a total of one or two nitrogen atoms.

**9.** The process according to any one of claims 1 to 8, wherein the Lewis base $L_N$ independently contains one or two nitrogen atoms, contains zero, one or two oxygen atoms, contains zero, one, two, three or four heteroatoms selected from the group consisting of fluorine, chlorine, bromine and iodine, and contains no further heteroatoms.

**10.** The process according to any one of claims 1 to 9, wherein the Lewis base $L_N$ is selected from the group consisting of pyridines, picolines, lutidines, collidines, bipyridines, pyridazines, pyrimidines, pyrazines, quinolines and isoquinolines.

**11.** The process according to any one of claims 1 to 10, wherein the Lewis base $L_N$ is selected from the group consisting of pyridine, 4-dimethylaminopyridine, and mixtures thereof.

**12.** The process according to any one of claims 1 to 11, wherein the synthesis is carried out in an aprotic solvent.

**13.** The process according to claim 12, wherein the solvent is pyridine.

## Revendications

**1.** Procédé de synthèse de précurseurs de phosphore (V) contenant de l'azote de formule (I),

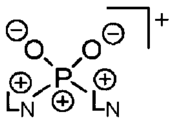

Formule (I),

dans lequel le procédé comprend les étapes suivantes dans l'ordre indiqué :

a) la mise à disposition d'un ester d'acide phosphorique ;
b) la réaction de l'ester d'acide phosphorique de l'étape a) avec un accepteur d'oxygène en présence d'une base de Lewis $L_N$ qui est capable de se coordonner par l'intermédiaire d'un atome d'azote,

dans lequel l'accepteur d'oxygène est le cation d'un anhydride d'acide sulfonique selon la formule (II) et l'anhydride d'acide sulfonique selon la formule (III),

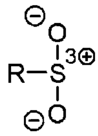

Formule (II),

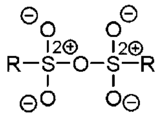

Formule (III),

dans lequel, selon l'étape b), soit

b1) l'ester d'acide phosphorique de l'étape a) réagit avec un anhydride d'acide sulfonique selon la formule (III) en présence d'une base de Lewis $L_N$,
soit
b2) l'ester d'acide phosphorique de l'étape a) réagit avec le produit de réaction d'un anhydride d'acide sulfonique selon la formule (III) avec une base de Lewis $L_N$, dans lequel le produit de réaction mentionné est selon la formule (IV)

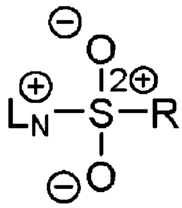

Formule (IV),

dans lequel R est un radical hydrocarboné aliphatique ou aromatique, qui peut contenir des hétéroatomes, dans lequel le nombre des atomes de carbone du radical R va de 1 à 21, et les hétéroatomes sont choisis parmi le groupe constitué de l'oxygène, de l'azote, du fluor, du chlore, du brome, de l'iode et de leurs mélanges,
dans lequel la base de Lewis $L_N$, qui est capable de se coordonner par l'intermédiaire d'un atome d'azote, est un composé hétéroaromatique azoté, qui contient un cycle hétéroaromatique à six maillons, lequel contient un atome d'azote capable de se coordonner, dans lequel le nombre des atomes de carbone de la base de Lewis $L_N$ va de 4 à 19, et dans lequel l'ester d'acide phosphorique de l'étape a) est selon l'une des formules (Va), (Vb) et (Vc)

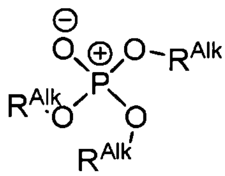

Formule (Va)

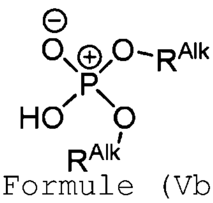

Formule (Vb)

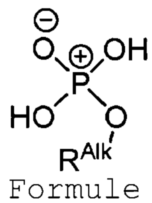

Formule (Vc)

dans lequel $R^{Alk}$ est un radical hydrocarboné, qui peut contenir des hétéroatomes.

2. Procédé selon la revendication 1, dans lequel la réaction de l'ester d'acide phosphorique avec un accepteur d'oxygène à l'étape b) est effectuée en présence d'au moins cinq équivalents d'une base de Lewis $L_N$.

3. Procédé selon la revendication 1 ou 2, dans lequel le nombre d'atomes de carbone de chaque $R^{AlK}$ va de 1 à 50 et dans lequel le nombre des atomes de carbone de tous les $R^{AlK}$ conjointement dans une des formules (Va), (Vb) ou (Vc) va de 1 à 50, et dans lequel les hétéroatomes de $R^{AlK}$ sont choisis parmi le groupe constitué d'azote, d'oxygène, de soufre, de fluor, de chlore et de brome.

4. Procédé selon l'une des revendications 1 à 3, dans lequel un atome de carbone de tous les radicaux hydrocarbonés $R^{AlK}$ dans une des formules (Va), (Vb) ou (Vc), qui est lié directement à l'atome d'oxygène de la liaison ester de l'ester

d'acide phosphorique, est également lié à trois autres atomes.

**5.** Procédé selon l'une des revendications 1 à 4, dans lequel R est un radical hydrocarboné aliphatique avec 1 à 6 atomes de carbone, qui contient 0 à 3 hétéroatomes qui sont choisis parmi le groupe constitué de l'oxygène, de l'azote et du fluor.

**6.** Procédé selon l'une des revendications 1 à 4, dans lequel R est un radical hydrocarboné aromatique, qui est défini par la formule (IIIa) suivante,

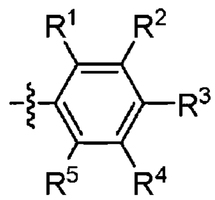
(IIIa),

dans lequel les radicaux $R^1$, $R^2$, $R^3$, $R^4$, et $R^5$ sont choisis parmi les combinaisons suivantes :

$R^1$, $R^2$, $R^3$, $R^4$, $R^5$ = H,
$R^1$, $R^2$, $R^3$, $R^4$, $R^5$ = $CH_3$,
$R^1$, $R^2$, $R^3$, $R^4$ = H et $R^5$ = $CH_3$,
$R^1$, $R^2$, $R^3$, $R^4$ = H et $R^5$ = F,
$R^1$, $R^2$, $R^3$, $R^4$ = H et $R^5$ = Cl,
$R^1$, $R^2$, $R^3$, $R^4$ = H et $R^5$ = $OCH_3$,
$R^1$, $R^2$, $R^3$, $R^4$ = H et $R^5$ = $NO_2$,
$R^1$, $R^2$, $R^3$, $R^4$ = H et $R^5$ = $CF_3$,
$R^1$, $R^2$, $R^4$ = H et $R^3$, $R^5$ = $CH_3$,
$R^2$, $R^4$ = H et $R^1$, $R^3$, $R^5$ = $CH_3$,
$R^2$, $R^3$, $R^5$ = H et $R^1$, $R^4$ = $CH_3$, ou
$R^1$, $R^2$, $R^4$, $R^5$ = H et $R^3$ = $CH_3$.

**7.** Procédé selon les revendications 5 et 6, dans lequel R est trifluorométhyle ou R est défini selon la formule (IIIa) et s'applique :
$R^1$, $R^2$, $R^4$, $R^5$ = H et $R^3$ = $CH_3$.

**8.** Procédé selon l'une des revendications 1 à 7, dans lequel la base de Lewis $L_N$ contient un ou deux cycles hétéroaromatiques à six maillons, la base de Lewis $L_N$ contient un ou deux atomes d'azote capables de se coordonner par cycle hétéroaromatique à six maillons dans le cycle hétéroaromatique à six maillons, dans lequel la base de Lewis $L_N$ contient au total un ou deux atomes d'azote.

**9.** Procédé selon l'une des revendications 1 à 8, dans lequel la base de Lewis $L_N$ contient indépendamment les uns des autres un ou deux atomes d'azote, zéro, un ou deux atomes d'oxygène, ainsi que zéro, un, deux, trois ou quatre hétéroatomes, qui sont choisis parmi le groupe constitué de fluor, de chlore, de brome et d'iode, et ne contient de surcroît pas d'autres hétéroatomes.

**10.** Procédé selon l'une des revendications 1 à 9, dans lequel la base de Lewis $L_N$ est choisie parmi le groupe constitué des pyridines, picolines, lutidines, collidines, bipyridines, pyridazines, pyrimidines, pyrazines, quinoléines et isoquinoléines.

**11.** Procédé selon l'une des revendications 1 à 10, dans lequel la base de Lewis $L_N$ est choisie parmi le groupe constitué de pyridine, 4-diméthylaminopyridine et de leurs mélanges.

**12.** Procédé selon l'une des revendications 1 à 11, dans lequel la synthèse est effectuée dans un solvant aprotique.

**13.** Procédé selon la revendication 12, dans lequel le solvant est la pyridine.

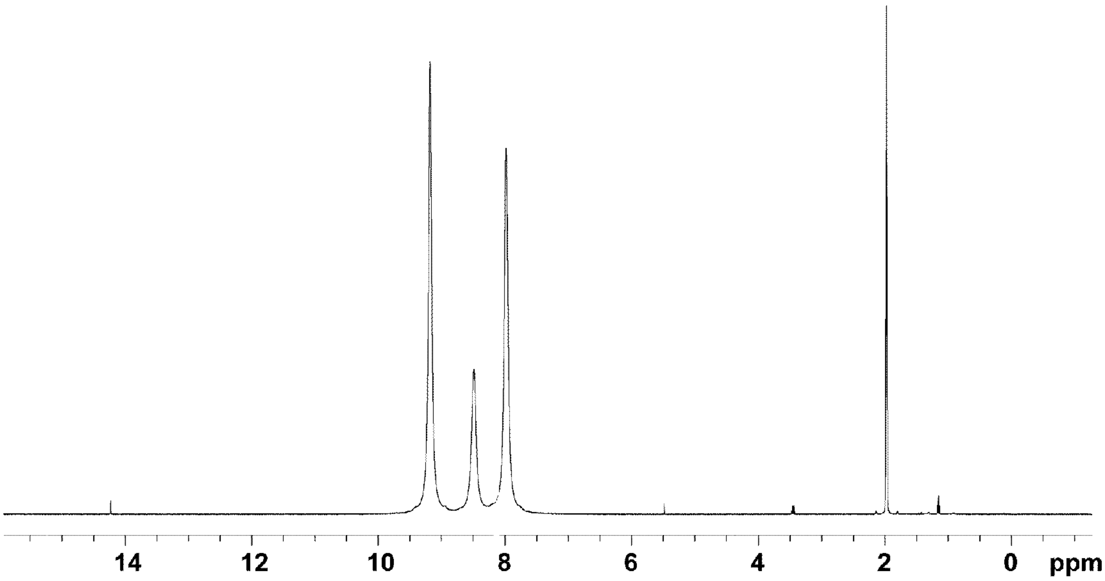


Abbildung 1

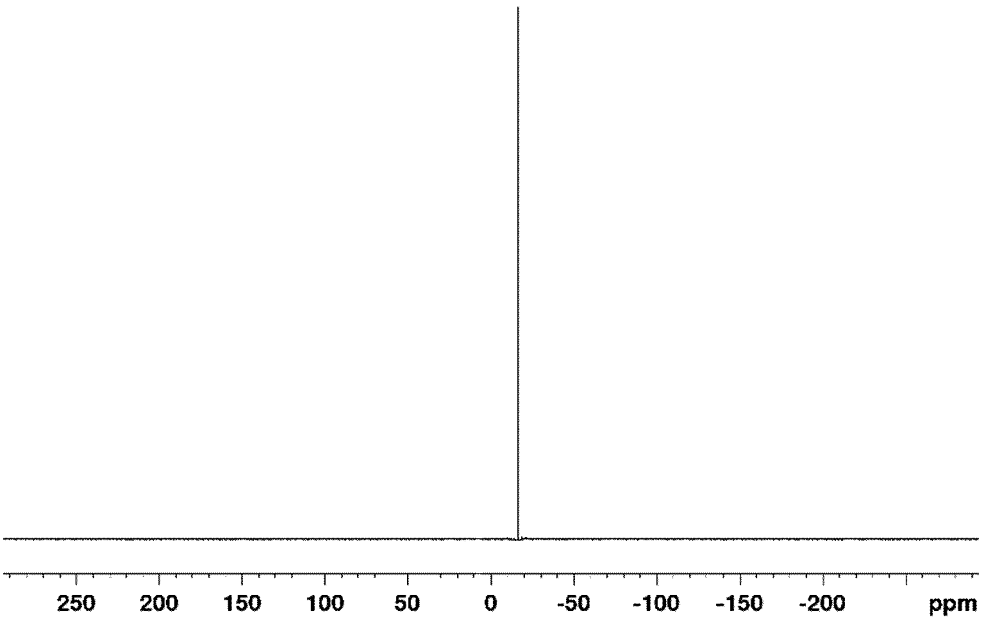


Abbildung 2

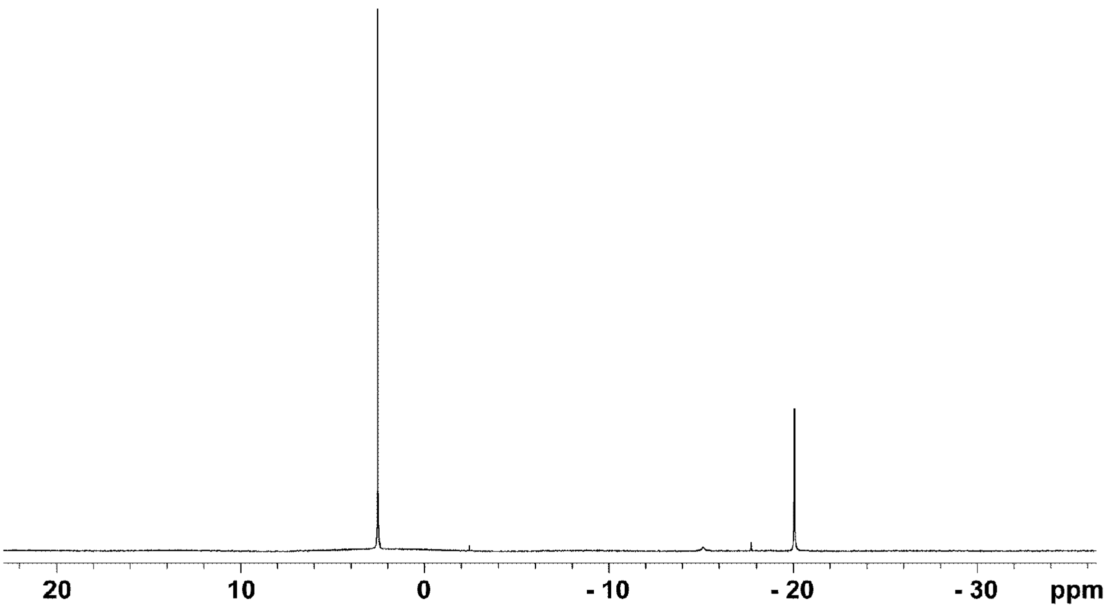

Abbildung 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 4183742 A1
- WO 2013002186 A1, A. Maruo, S. Yamazaki
- WO 2015128363 A1, A. Garsuch, M. Schmidt, R. Schmitz, I. Krossing, P. Eiden, S., Reininger


### In der Beschreibung aufgeführte Nicht-Patentliteratur


- **W. SCHIPPER**. *Eur. J. Inorg. Chem.*, 2014, 1567
- Report of the Ad hoc Working Group on defining critical raw materials. Report on Critical Raw Materials for the EU Ref. Ares. European Commission, 29 April 2015, vol. 2015, 1819503
- **EMSLEY, J.** The 13th Element: The Sordid Tale of Murder, Fire, and Phosphorus. John Wiley & Sons, Inc., 2000
- Phosphorus. **H. DISKOWSKI** ; **T. HOFMANN**. Ullmann's Encyclopedia of Industrial Chemistry. Wiley, 2000
- Phosphoric Acid and Phosphates. **K. SCHRÖDTER et al.** Ullmann's Encyclopedia of Industrial Chemistry. Wiley, 2008
- **O. GANTNER** ; **W. SCHIPPER** ; **J. J. WEIGAND**. Sustainable Phosphorus Management. Springer, 2014
- **H. OHTAKE** ; **S. TSUNEDA**. Phosphorus Recovery and Recycling. Springer, 2018
- **J. L. JONES** ; **Y. G. YINGLING** ; **I. M. REANEY** ; **P. WESTERHOFF**. *MRS Bull.*, 2020, vol. 45, 7
- **EMSLEY, J**. The 13th Element: The Sordid Tale of Murder, Fire, and Phosphorus. John Wiley & Sons, Inc., 2000
- **O. GANTNER** ; **W. SCHIPPER** ; **J. J. WEIGAND**. Sustainable Phosphorus Management. 2014
- **M. B. GEESON** ; **C. C. CUMMINS**. *Science*, 2018, vol. 359, 1383
- **M. B. GEESON** ; **C. C. CUMMINS**. *ACS Cent. Sci.*, 2020, vol. 6, 848
- **A. OSUMAH** ; **R. KRISHNAMURTHY**. *ChemBioChem.*, 2021, vol. 22, 3001-3009
- **E. THILO**. *Angew. Chem. Int. Ed.*, 1965, vol. 4, 1061-1071
- **W. FELDMANN** ; **E. THILO**. *Z. Anorg. Allg. Chem.*, 1964, vol. 328, 113-126
- **D. LUCAS et al.** *Environ. Eng. Sci.*, 2018, vol. 35, 573
- **D. PARMAR** ; **E. SUGIONO** ; **S. RAJA** ; **M. RUEPING**. *Chem. Rev.*, 2014, vol. 114, 9047